# FASCICULE DE BREVET EUROPEEN

(11) **EP 2 021 227 B1**
(45) Date de publication et mention de la délivrance du brevet: **13.07.2011**
(21) Numéro de dépôt: 07766041.3
(22) Date de dépôt: 14.05.2007
(51) Int. Cl.: B62D 47/02, B62D 53/00, B60D 1/54

(54) **VEHICULE SUR ROUES, PROCEDE D'ATTELAGE, PROCEDE DE DESATELLAGE, PROCEDE DE GESTION DE CES VEHICULES ET TRAIN DE VEHICULES RESULTANT**
BERÄDERTES FAHRZEUG, KUPPLUNGSVERFAHREN, ABKUPPLUNGSVERFAHREN, VERFAHREN ZUR HANDHABUNG DERARTIGER FAHRZEUGE UND RESULTIERENDER FAHRZEUGZUG
WHEELED VEHICLE, HITCHING METHOD, UNHITCHING METHOD, METHOD FOR MANAGING SAID VEHICLES AND RESULTING TRAIN OF VEHICLES

(30) Priorité: 17.05.2006 FR 0651788
(43) Date de publication de la demande: 11.02.2009
(73) Titulaire: Eurolum, 75001 Paris (FR)
(72) Inventeur: FRANCHINEAU, Jean-Laurent, F-75015 Paris (FR)
(74) Mandataire: Cardy, Sophie Marie
(86) Numéro de dépôt international: PCT/FR2007/051265
(87) Numéro de publication internationale: WO 2007/132121

(56) Documents cités:
- WO-A-98/40263
- WO-A1-01/87684
- US-A- 4 596 192

## Description

L'invention concerne un véhicule autonome sur roues muni d'une cabine de pilotage et d'un espace de transport de passagers et/ou d'objets, un procédé d'attelage entre au moins deux de ces véhicules, et un train de véhicules, ainsi qu'un procédé de désattelage de ce train de véhicules permettant de le dételer en tout ou partie.

L'invention porte également sur un procédé de gestion d'un réseau de transport de personnes et/ou d'objets utilisant ces véhicules, un procédé de gestion d'un ensemble de véhicules du même type et un procédé de transport de passagers et/ou d'objets au moyen d'un ensemble de véhicules du même type.

Classiquement, pour le transport sur route des passagers ou des marchandises, on emploie des véhicules de tailles variées afin de répondre aux besoins variables de volume de passagers ou d'objets. Par objet, on entend toute chose qui est transportable, qu'elle soit solide, liquide gazeuse, en blocs ou pulvérulente, par exemple des marchandises ou encore tout autre type d'objets comme les déchets ménagers ou industriels.

Dans le domaine des transports en communs, on constate plusieurs phénomènes. Les agglomérations urbaines se sont considérablement dilatées. Les lieux de résidence, de travail, de consommation et de loisirs se sont éloignés les uns des autres, ce qui nécessite de parcourir de plus en plus de kilomètres sur route pour assurer une offre de transport. Certains kilomètres en périphérie de ces agglomérations sont faiblement fréquentés.

Selon les agglomérations, les réseaux de transport en commun présentent des formes variées, généralement en forme de réseau arborescent ou en étoile.

La capacité totale des véhicules qui est généralement dimensionnée pour les zones les plus fréquentées de l'hyper centre n'est plus nécessaire en périphérie, et entraîne une masse à vide à traîner, ce qui est un facteur de coûts d'investissement et d'exploitation, de consommation d'énergie et de nuisances excessifs pour l'exploitant et son environnement Dans ces zones périphériques, un véhicule plus court suffit. En revanche, en centre ville, un véhicule plus long est utile.

Ainsi, si l'on utilise des véhicules longs, tels que des autobus articulés, ils voient un taux de remplissage satisfaisant uniquement en centre ville et aux heures de pointe.

Des solutions ont été proposées en utilisant des véhicules de deux types : des véhicules courts dans les zones périphériques peu fréquentées du réseau dont les lignes se rejoignent en des noeuds du réseau où des véhicules longs prennent le relais pour parcourir les zones centrales plus fréquentées, tandis que les véhicules courts repartent en sens inverse. Dans ce cas, cependant, si l'on peut mieux adapter le nombre de véhicules aux besoins du réseau, Il persiste, pour les voyageurs, un désavantage majeur car ils doivent tous changer de véhicule aux noeuds de transition entre la zone centrale (ZC) et les zones périphériques.

Il est également connu d'atteler une voiture de tête menant servant de véhicule de traction, reliée, par un attelage, à un ou plusieurs wagons de transport menés, afin de former un train de véhicules roulant sur route. Les documents WO 2004/014715 et US 4 948 157 présentent ce genre de véhicules sous la forme d'autobus avec ou sans soufflet entre les wagons. Le document US 6 926 344 prévoit ce genre de soufflet qui est notamment utilisé pour des bus articulés.

Cependant, le type de véhicule articulé présente un certain nombre d'inconvénients. En particulier, le véhicule n'est pas modulaire, son stockage est difficile, et il présente une consommation excessive aux heures creuses.

Le véhicule modulable présente quant à lui une dissymétrie. Le véhicule de tête est différent des autres modules et une permutation de l'ensemble des différents véhicules entre eux n'est pas possible.

Egalement, le document FR 2 606 354 prévoit des véhicules routiers à conduite autonome ou attelable pour former un train routier à un seul conducteur : la solution proposée est cependant contraignante s'agissant de la procédure, manuelle, pour atteler et dételer les véhicules.

La présente invention a pour objectif de fournir un véhicule routier de transport de personnes et/ou d'objets, permettant de surmonter les inconvénients de l'art antérieur.

Le document WO 98/40263 présente des véhicules individuels autonomes sur roues munis d'une cabine de pilotage et d'un espace de transport de passagers, qui comportent un essieu avant directeur et un système d'attelage escamotable permettant de relier les uns avec les autres lesdits véhicules par un attelage, afin de former un train de véhicules.

En particulier, la présente invention cherche à proposer un véhicule routier autonome offrant la possibilité de pouvoir être assemblé rapidement et aisément de façon réversible à d'autres véhicules identiques pour former un train de véhicules, ce train de véhicules pouvant être lui-même désassemblé en tout ou partie pour former une flotte de véhicules autonomes de longueur variable venant se plier à la charge variable en passagers et/ou d'objets du réseau, en fonction des besoins de chaque zone à un moment donné, en tenant compte des périodes creuse et des périodes de pointe.

Egalement, outre la facilité d'attelage et de désattelage, on souhaite proposer un véhicule qui dans la position attelée, formant un train de véhicules, et dans la position désattelée proposant un véhicule autonome, assure la sécurité des personnes situées à l'extérieur du (ou des) véhicule(s).

A cet effet, selon la présente invention, le véhicule autonome sur roue est muni d'une cabine de pilotage et d'un espace de transport de passagers et/ou d'objets, et il est caractérisé en ce qu'il présente :
- au moins un essieu avant directeur et, de façon particulière mais non systématique, au moins un essieu arrière directeur,
- un système d'attelage escamotable comprenant une première partie située à l'avant du véhicule et une deuxième partie située à l'arrière du véhicule, la première partie d'un véhicule étant apte à coopérer avec la deuxième partie d'un autre véhicule, lorsque le système d'attelage est sorti, afin de relier les véhicules en formant entre eux un attelage, et
- des moyens de protection dudit attelage.

De cette manière, on comprend que par le fait que ces véhicules identiques peuvent circuler seuls de façon indépendante et former, lorsqu'ils ont assemblés, un train de véhicule de plus grande capacité qui est articulé, on obtient des assemblages de véhicules routiers identiques qui sont modulaires le long de leurs trajets, ce qui permet d'organiser le réseau de transport afin qu'il permette l'assemblage ou le désassemblage de ces trains de véhicules routiers autonomes selon les besoins. Ces véhicules sont, lorsqu'ils sont séparés, autonomes à la fois en pilotage et en moyens de propulsion.

Le caractère escamotable du système d'attelage assure une discrétion et une sécurité en dehors des périodes où le système d'attelage est sorti et forme un attelage avec le système d'attelage d'un autre véhicule.

Cette solution assure également la sécurité des personnes lorsque le système d'attelage est sorti et forme un attelage avec le système d'attelage d'un autre véhicule, grâce aux moyens de protection dudit attelage, par exemple sous la forme d'un soufflet et/ou d'une jupe de protection.

Egalement, la procédure d'attelage ou de désattelage physique peut s'effectuer en mode semi-automatique (commandé par un seul opérateur depuis sa cabine de pilotage) ou de façon entièrement automatique. Aussi, la procédure d'attelage ou de désattelage peut notamment se réaliser lorsque les véhicules/trains de véhicules circulent à des emplacements spécifiques, en particulier sur un site protégé, afin d'assurer un maximum de sécurité.

Globalement, grâce à la solution selon la présente invention, il est possible d'utiliser le véhicule de transport de passagers ou d'objets de façon plus rationnelle.

De façon avantageuse et préférée, ladite deuxième partie du système d'attelage peut être activée de façon à passer d'une position escamotée vers une position sortie dans laquelle ladite deuxième partie est apte à coopérer avec ladite première partie du système d'attelage d'un autre véhicule en formant entre eux un attelage.

De cette façon, lorsqu'il n'est pas utilisé pour former un attelage entre deux véhicules, du fait que la deuxième partie est escamotée, par exemple à l'intérieur du véhicule, le système d'attelage est rendu d'une part essentiellement non visible et d'autre part il perd son caractère dangereux.

De préférence, ladite deuxième partie du système d'attelage présente une barre d'accrochage, notamment coulissante ou télescopique, pouvant passer de façon automatique de sa position escamotée à sa position sortie et inversement.

Pour faciliter la manoeuvre d'attelage, il est avantageusement prévu que ledit système d'attelage présente en outre des moyens de guidage du déplacement de la deuxième partie du système d'attelage entre la position escamotée et la position sortie. Egalement, on prévoit avantageusement que ledit système d'attelage présente en outre des moyens de guidage permettant, lors du passage de la deuxième partie dans la position sortie, de guider sa venue en coopération avec ladite première partie du système d'attelage.

Selon une autre disposition préférentielle de la présente invention, le système d'attelage comporte des moyens de liaisons autorisant un jeu selon au moins trois degrés de liberté, de sorte que le système d'attelage puisse absorber, dans une certaine limite, des mouvements dans tous les sens entre deux véhicules attelés.

Egalement, selon encore une autre disposition préférentielle de la présente invention, et pour une facilité de mise en oeuvre, lesdits moyens de protection dudit attelage sont aptes à passer d'une position repliée à une position déployée dans laquelle ledit attelage est entouré par les moyens de protection. Ce mouvement de déploiement et le mouvement de retour de repliement, peut être commandé de façon manuel ou automatique.

Ces moyens de protection sont par exemple de type soufflet, à paroi pleine ou non (grillage) ou selon toute autre disposition qui empêche l'accès au système d'attelage pendant et après la procédure d'attelage.

Avantageusement, ces moyens de protection sont situés à l'arrière de chaque véhicule et peuvent présenter l'une ou l'autre des dispositions suivantes :
- les moyens de protection peuvent être invisibles dans leur position repliée, par exemple en s'encastrant dans l'arrière du véhicule,
- les moyens de protection peuvent présenter une forme qui coopère avec la forme de l'avant du véhicule de sorte que les moyens de protection forme la continuité de l'avant du véhicule mené situé derrière le véhicule considéré,
- les moyens de protection sont liés avec le système d'attelage, et en particulier avec la barre d'accrochage, afin de se déplacer simultanément lorsque le système d'attelage passe de sa position escamotée à sa position sortie.

De préférence, le véhicule comporte en outre des moyens de couverture du système d'attelage escamoté, par exemple sous la forme d'un ou de plusieurs capots, afin d'éviter un accès à des parties du système d'attelage qui pourraient entraîner des accidents.

On prévoit avantageusement que lesdits moyens de couverture comportent un capot apte à venir entourer la deuxième partie ou à refermer l'espace contenant la deuxième partie du système d'attelage dans sa position escamotée.

En outre, de façon avantageuse, on prévoit en outre que le véhicule comporte en outre une architecture logicielle qui comprend un ordinateur d'attelage et un ordinateur des essieux. En particulier, on prévoit que le véhicule présente en outre des moyens permettant à l'ordinateur d'attelage de connaître la situation du système d'attelage dudit véhicule, et notamment la formation d'un attelage, avec un autre véhicule.

De préférence, ladite architecture logicielle comprend en outre un superviseur qui permet, via l'ordinateur d'attelage, de vérifier la position verrouillée de l'attelage entre deux véhicules, afin d'avertir si cette position verrouillée est inexistante Ces dispositions d'ordre sécuritaire permettent d'assurer que l'attelage formé entre deux véhicules ne présente aucun problème.

L'invention concerne également, un procédé d'attelage entre au moins deux véhicules du type présenté précédemment. Ce procédé d'attelage se caractérise en ce qu'il comporte les étapes suivantes :
a) on déplace un premier véhicule formant le véhicule menant en un emplacement d'accostage,
b) on déplace un autre véhicule formant un véhicule mené de façon à l'aligner derrière le véhicule menant, à une distance d'accostage prédéterminée,
c) on active la deuxième partie du système d'attelage du véhicule menant et la première partie du système d'attelage du véhicule mené de façon à réaliser entre eux un attelage et
d) on active les moyens de protection dudit système d'attelage, situés à l'arrière du véhicule menant, afin d'empêcher tout contact entre l'attelage et un élément extérieur au train de véhicules ainsi formé.

Selon ce procédé d'attelage, on peut ajouter un véhicule mené supplémentaire par le fait que sont mises en oeuvre, pour chaque véhicule mené supplémentaire, des étapes supplémentaires correspondant aux étapes b) à d) et dans lesquelles :
b') le véhicule mené supplémentaire est déplacé de façon à être aligné derrière le véhicule mené précédemment attelé, à une distance d'accostage prédéterminée, puis
c') on active la deuxième partie du système d'attelage du véhicule mené supplémentaire et la première partie du système d'attelage du véhicule mené précédemment attelé qui le précède de façon à réaliser entre eux un attelage supplémentaire et
d') on active les moyens de protection dudit attelage supplémentaire, situés à l'arrière du véhicule mené précédemment attelé, afin d'empêcher tout contact entre l'attelage supplémentaire et un élément extérieur au train de véhicules ainsi formé.

De cette façon, on comprend qu'il est facile d'ajouter un véhicule mené supplémentaire, à un ou plusieurs emplacements différents du réseau de transport, et par exemple sur une même ligne de transport en cours d'exploitation, et ceci afin de répondre aux besoins de zones de plus grande affluence.

Selon un mode de réalisation préféré, le véhicule comporte en outre un système de guidage immatériel qui est notamment utilisé pendant l'étape b) ou b') de déplacement du véhicule mené du procédé d'attelage. Notamment, ce système de guidage immatériel peut fonctionner avec un guidage optique, guidage magnétique, ou par guidage électromagnétique par pseudo-distances ou par mesures de phases, par exemple un système de positionnement satellitaire type GPS ou GALILEO ou GLONASS.

En particulier, ledit système de guidage immatériel utilise un tracé de référence sur la voie de circulation et des détecteurs d'obstacle.

Ainsi, grâce à un tel système de guidage immatériel, on peut assurer de façon fiable un bon positionnement entre les deux véhicules avant d'effectuer leur attelage, que ce soit pour ajuster la distance longitudinale entre deux véhicules avant leur attelage, ou pour respecter un alignement entre eux afin d'éviter notamment tout écart latéral ou déportement entre eux.

Sur ces aspects de guidage automatique et de guidage au sol, on peut se reporter par exemple à WO98/47754, WO99/14096, EP0919449 et FR2766782, ou encore à FR2780696 qui porte sur un système de guidage automatique embarqué de véhicule avec module de reprise en main volontaire.

La présente invertion concerne également un procédé de gestion d'un réseau de transport de passagers et/ou d'objets utilisant des véhicules du type présenté précédemment. Ce procédé de gestion se caractérise en ce qu'il met en oeuvre les étapes suivantes:
- on conduit au moins deux véhicules et/ou ensembles de véhicules provenant d'origine différentes (A,B, C, D, E, F...) vers un ou des pôles de bifurcation (K, H..) du réseau qui sépare une zone centrale (ZC) de grande affluence d'une zone périphérique (ZP1, ZP2) de moindre affluence, et
- on réalise audit pôle de bifurcation le procédé d'attelage défini ci-dessus entre ces véhicules pour former un train de véhicule à un seul conducteur lorsque lesdits véhicules se dirigent depuis la zone périphérique (ZP1, ZP2) en direction de la zone centrale (ZC).

La présente invention porte de plus sur un train de véhicules formé par attelage entre plusieurs véhicules du type présenté précédemment. Ce train de véhicules se caractérise en ce qu'il comporte un seul véhicule menant et au moins un véhicule mené, situé derrière le véhicule menant, lesdits véhicules étant reliés l'un à l'autre par ledit attelage dont le contact, avec un élément extérieur aux véhicules, est empêché par lesdits moyens de protection.

Il est bien entendu que des pôles de bifurcation peuvent se situer dans toutes les zones, à savoir notamment dans la zone centrale (ZC) et/ou dans les zones périphériques (ZP1, ZP2).

On comprend que ce train de véhicules est formé de véhicules de même type, qui peuvent toutefois être différents entre eux sur certains aspects parmi lesquels la longueur totale du véhicule ou la longueur entre les essieux, notamment entre les deux essieux directeurs, avant et arrière.

L'invention porte également sur un procédé de désattelage du dernier attelage d'un train de véhicules du type défini ci-dessus, comportant au moins un dernier véhicule mené et un véhicule menant, caractérisé en ce qu'il comporte les étapes suivantes :
a) on active les moyens de protection du dernier attelage situé entre le dernier véhicule mené et le véhicule qui le précède afin de dégager ledit dernier attelage;
b) on active la deuxième partie du système d'attelage du dernier véhicule mené et la première partie du système d'attelage du véhicule qui le précède de façon à défaire le dernier attelage et à escamoter ladite deuxième partie du système d'attelage, ce par quoi le dernier véhicule mené est séparé du train de véhicule et forme un véhicule autonome et un train de véhicules restants, et c) on déplace ledit véhicule autonome ou le train de véhicules restant.

Avantageusement, ce procédé de désattelage comporte en outre, après l'étape b), une étape supplémentaire dans laquelle on active lesdits moyens de couverture du dernier véhicule du train de véhicules restants, pour cacher la deuxième partie, escamotée, du système d'attelage.

De cette façon, on comprend qu'il est facile de retirer à un ou plusieurs emplacements différents du réseau de transport, et par exemple sur une même ligne de transport en cours d'exploitation, un des véhicules mené ou tous les véhicules menés, et ceci pour diminuer la longueur totale du train de véhicules afin de s'ajuster aux besoins des zones de moindre affluence.

De plus, par symétrie, la présente invention concerne un procédé de gestion d'un réseau de transport de personnes et/ou d'objets utilisant des véhicules du type présenté précédemment, qui se caractérise en ce qu'il met en oeuvre les étape ; suivantes :
- on conduit un train de véhicules comprenant au moins deux véhicules attelés vers un pôle de bifurcation (H, K,...) de la zone centrale (ZC), et
- on réalise entre ces véhicules, audit pôle de bifurcation (H, K,...), le procédé de désattelage défini ci-dessus pour défaire un train de véhicule à un seul conducteur provenant de la zone centrale (ZC) et obtenir plusieurs véhicules individuels autonomes et/ ou ensembles de véhicules autonomes se dirigeant en direction de la zone périphérique (ZP1, ZP2) selon différents trajets vers une autre station (A, B, C, D, E, F,...).

En outre, la présente invention porte sur un procédé de gestion d'un réseau de transport de personnes et/ou d'objets utilisant des véhicules du type présenté précédemment, qui se caractérise en ce qu'il met en oeuvre les étapes suivantes :
- on conduit au moins deux véhicules et/ ou ensembles de véhicules en un pôle de bifurcation (K, H,..) du réseau qui sépare une zone centrale (ZC) de grande affluence d'une zone périphérique (ZP1, ZP2) de moindre affluence ;
- on réalise au dit pôle de bifurcation (K, H,...) l'attelage entre ces véhicules pour former un train de véhicules à un seul conducteur lorsque lesdits véhicules se dirigent depuis la zone périphérique (ZP1, ZP2) en direction de la zone centrale (ZC),
ou
- on réalise au dit pôle de bifurcation (K, H,...) le désattelage entre ces véhicules pour défaire un train de véhicule à un seul conducteur provenant de la zone centrale (ZC) et obtenir plusieurs véhicules individuels autonomes et/ ou ensembles de véhicules autonomes se dirigeant en direction de la zone périphérique (ZP1, ZP2) selon différents trajets.

Enfin, la présente invention concerne un procédé de transport de passagers et/ou d'objets et un procédé de gestion d'un ensemble de véhicules, au moyen d'un ensemble de véhicules du même type, comprenant une cabine de pilotage, un espace de transport de personnes et/ou d'objets, au moins un essieu avant directeur et un système d'attelage escamotable permettant de relier, par un attelage, les uns derrière les autres lesdits véhicules pour former un train de véhicules comprenant au moins deux véhicules et permettant de séparer les uns des autres lesdits véhicules pour former plusieurs véhicules individuels autonomes et/ou ensembles de véhicules autonomes, l'opération d'attelage ou de désattelage s'effectuant à un pôle de bifurcation (H; K; ...) d'un circuit de circulation en forme de réseau arborescent ou en étoile, le pôle de bifurcation (H; K; ...) se trouvant entre des zones de concentration de personnes et/ou d'objets différentes.

Dans le cadre de ce procédé de transport, de préférence il s'agit d'un procédé de transport de passagers et lesdits véhicules sont des autobus de transport de passagers.

En outre, selon une autre disposition préférentielle de ce procédé de transport de passagers et/ou d'objets, le pôle de bifurcation se trouve dans une portion en étoile du réseau, entre une zone centrale (ZC) de forte concentration de passagers et/ou d'objets et une zone périphérique (ZP1, ZP2) de faible concentration de passagers et/ou d'objets.

On prévoit de plus avantageusement que selon ce procédé de transport de passagers, lesdits véhicules comportent en outre des moyens de protection dudit attelage formé entre deux véhicules reliés l'un à l'autre, et ceci afin d'empêcher tout contact entre l'attelage et un élément extérieur aux véhicules, et notamment de blesser un passant ou un passager.

D'autres avantages et caractéristiques de l'invention ressortiront à la lecture de la description suivante faite à titre d'exemple et en référence aux dessins annexés dans lesquels :
- la figure 1 est une vue schématique en perspective de la première étape d'un procédé d'attelage entre deux véhicules ;
- La figure 2 représente la deuxième étape du procédé d'attelage ;
- La figure 3 représente la troisième étape du procédé d'attelage ;
- La figure 4 représente la quatrième étape du procédé d'attelage;
- La figure 5 est un diagramme illustrant un exemple de procédé de gestion du réseau de transport utilisant des véhicules selon la présente invention au cours d'un premier mouvement des véhicules, aux heures de pointe ;
- La figure 6 est un diagramme similaire à celui de la figure 5 montrant un deuxième mouvement des véhicules;
- Les figures 7 et 8 sont similaires aux figures 5 et 6, pour une exploitation à des heures creuses,
- Les figures 9 à 13 représentent un mode de réalisation du système d'attelage; et
- La figure 14 représente l'architecture logicielle permettant la communication pendant et après la mise en oeuvre du procédé d'attelage.

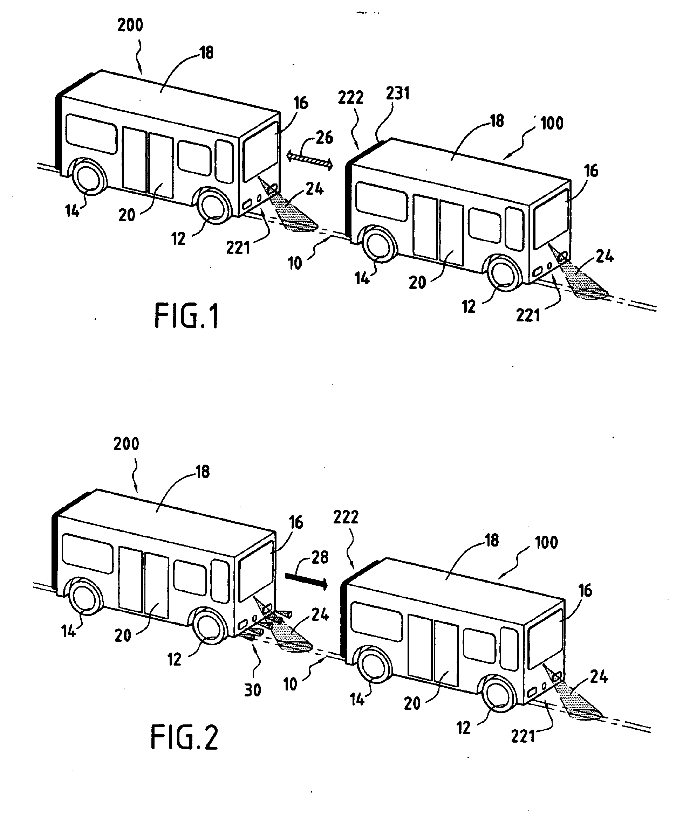

Sur la figure 1, on voit deux véhicules identiques 100 et 200 placés l'un derrière l'autre le long d'un tracé de référence 10 disposé sur la voie de circulation. Les véhicules 100 et 200 sont identiques et présentent :
- un essieu avant directeur 12 de type rigide, semi-rigide ou à roues indépendantes, piloté par le conducteur du véhicule, et
- un essieu arrière 14, de préférence autodirecteur, de type rigide, semi-rigide ou à roues indépendantes, asservi par un système automatisé.

Quand les deux essieux, avant et arrière, de chaque véhicule sont directeurs, on peut disposer d'une meilleure aptitude à la manoeuvre et au braquage, ainsi qu'une stabilité accrue.

De plus, l'espace intérieur de chaque véhicule est réparti entre, à l'avant (à droite sur la figure 1), une cabine de pilotage 16 et, au milieu et à l'arrière (à gauche sur la figure 1), un espace de transport 18 pour des passagers présentant une ou plusieurs portes automatiques 20.

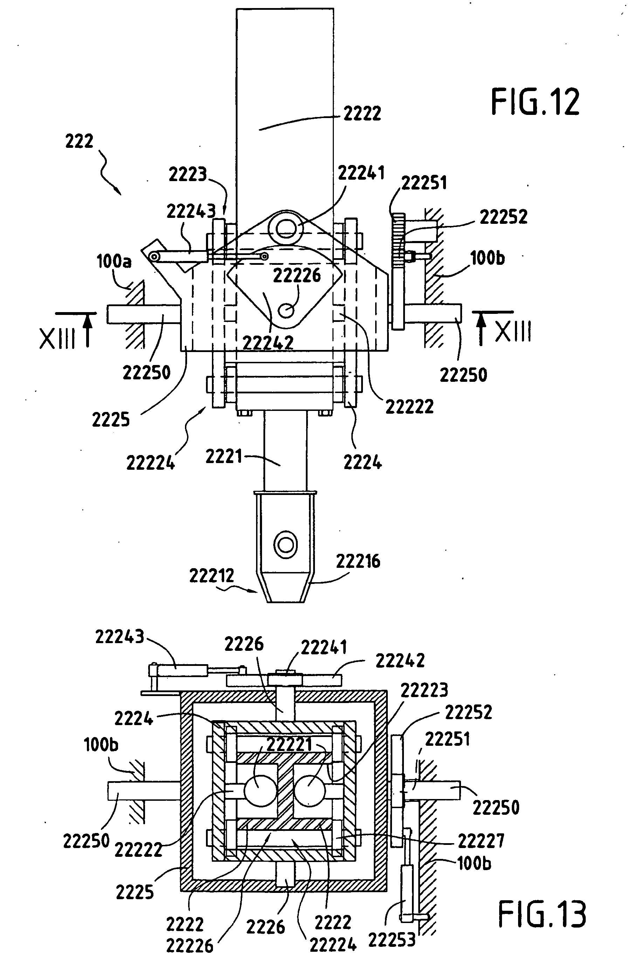

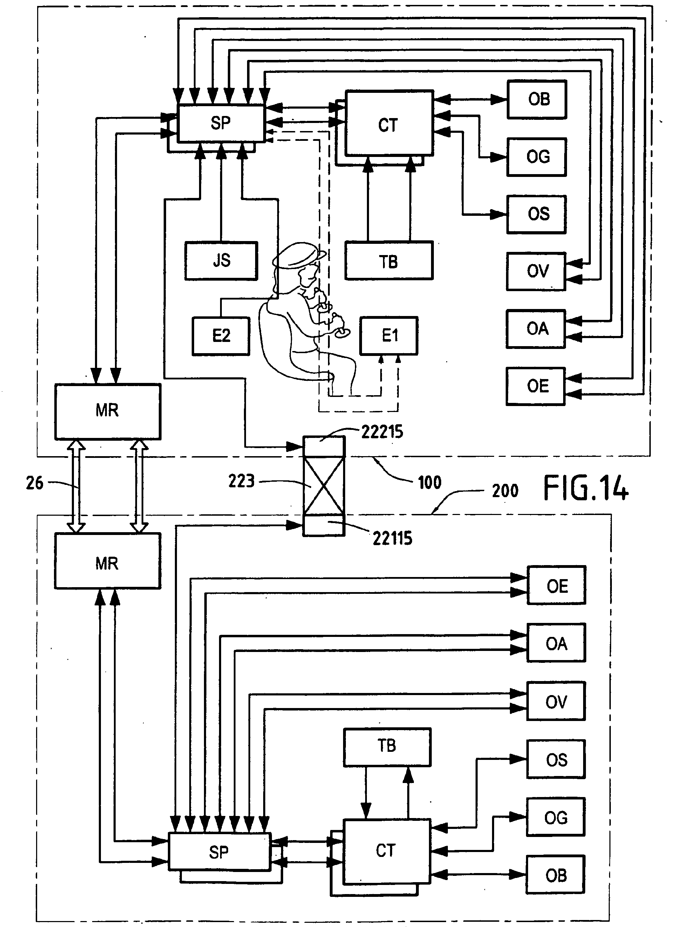

Chaque véhicule 100 et 200 comporte en outre un système d'attelage 22 (voir la figure 13) disposé en partie basse de la carrosserie et comprenant une première partie 221 située à l'avant du véhicule (voir figure 1) et une deuxième partie 222 (voir figure 1) située à l'arrière du véhicule et qui reste escamotée, donc non visible pendant les périodes où les véhicules 100 et 200 sont séparés les uns des autres et restent autonomes.

Également, chaque véhicule 100 et 200 comporte un système de guidage immatériel embarqué fonctionnant avec le tracé de référence 10. À titre d'exemple, sur les figures, on a considéré que les véhicules 100 et 200 présentent en plus un système de guidage utilisant la télémétrie et présentant à cet effet, à l'avant, un ou plusieurs détecteurs de distance associés à un module de guidage optique, ainsi que des détecteurs d'obstacles de proximité (non représentés).

Lorsque les deux véhicules 100 et 200 vont être attelés conformément au procédé d'attelage selon la présente invention, chacun de ces véhicules est dirigé vers une station d'attelage (qui forme ici un pôle de bifurcation ou un pôle d'échange servant aussi de station de voyageur) au niveau de laquelle se trouve le tracé de référence 10.

Dans un premier temps, comme il apparaît sur la figure 1, le véhicule 100, qui va former le véhicule de tête menant, est aligné sur le tracé de référence 10, par un déplacement en mode guidé, grâce à la lecture de ce dernier par les détecteurs correspondants (faisceau de lecture 24 sur la figure 1), puis le véhicule 100 est alors stoppé le long du tracé de référence 10.

Ensuite, le véhicule 200 arrive par derrière, le long du tracé de référence 10 (faisceau de lecture 24 sur la figure 1), puis une communication s'établit entre les deux véhicules 100 et 200 (voir la flèche 26 sur la figure 1 et sur la figure 14), le véhicule 100 rentrant en contact avec le véhicule 200 pour lui demander d'avancer automatiquement après s'être assuré que le véhicule 200 était sécurisé, à savoir notamment que ses portes 20 sont fermées.

Dans l'étape suivante, comme il apparaît sur la figure 2, le véhicule arrière 200 avance (flèche 28 sur la figure 2) automatiquement, avec ou sans conducteur, grâce au module de guidage optique (faisceau de lecture 24) le long du tracé de référence 10 en se servant des détecteurs d'obstacles de proximité (faisceaux 30 sur la figure 2) afin de s'assurer, à tout moment, de l'éventuelle insertion d'un objet, d'une personne entre le véhicule avant 100 et le véhicule arrière 200 pour pouvoir stopper, le cas échéant et momentanément, cette manoeuvre d'approche.

Cette manoeuvre d'approche se déroule jusqu'au moment où le véhicule 200 est parvenu à une distance du véhicule de tête 100 qui est prédéterminée et qui a été programmée dans le système de guidage. Il faut relever que cette distance prédéterminée est inférieure au déplacement longitudinal maximal de la barre d'accrochage 2221.

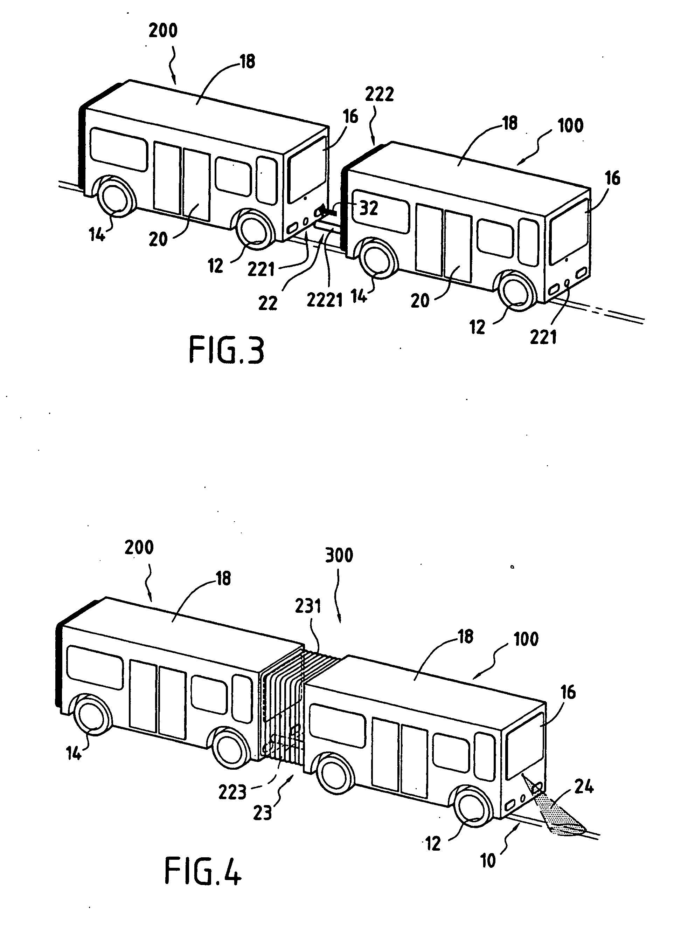

Dans l'étape suivante, comme il apparaît sur la figure 3, on entre dans la phase d'accrochage entre les deux véhicules 100 et 200.

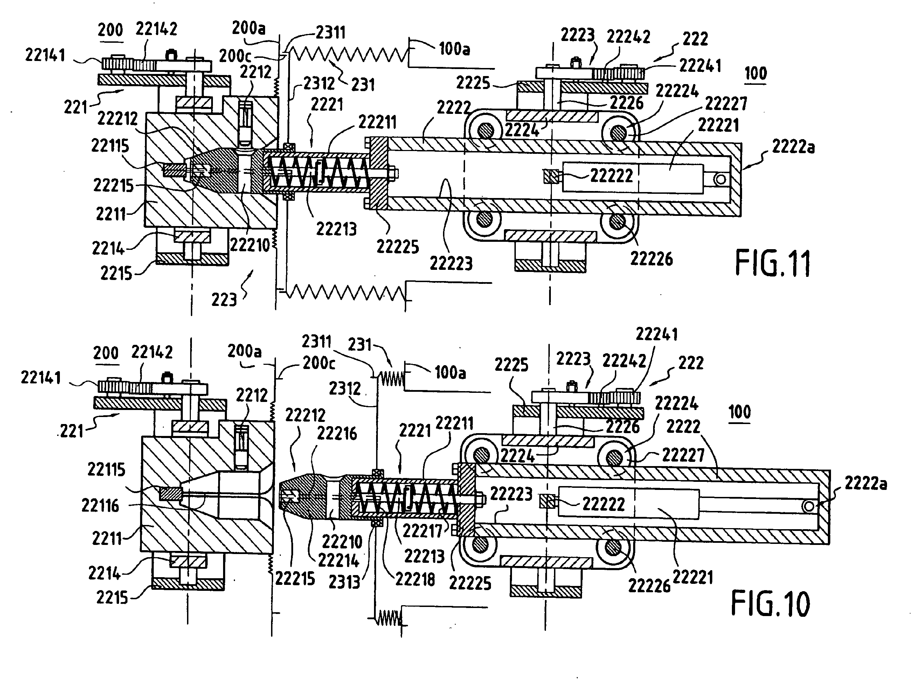

Au préalable, et le cas échéant car il s'agit d'une variante facultative, un capot de protection (non représenté) disposé devant la deuxième partie 222 du système d'attelage 22 au niveau de la carrosserie 100a (voir la figure 11), est déplacé dans une position ouverte pour dégager la sortie de la barre d'accrochage 2221.

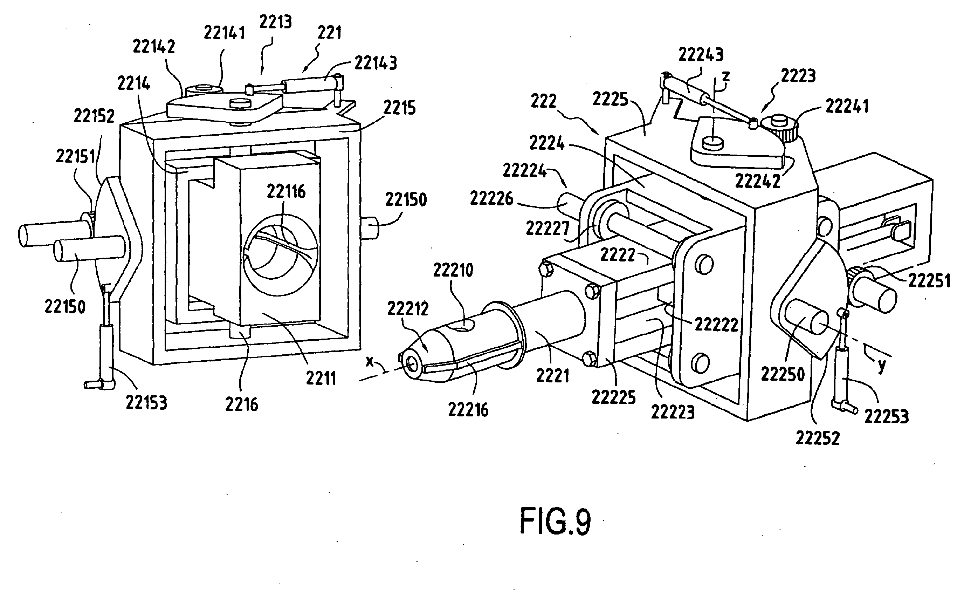

Pour cette phase d'accrochage, le système d'attelage 22 des deux véhicules 100 et 200 est activé. Plus précisément, la deuxième partie 222 du système d'attelage du véhicule avant 100 passe de sa première position ou position escamotée, dans laquelle elle est invisible, dans sa deuxième position ou position sortie, dans laquelle une barre d'accrochage 2221 télescopique sort (flèche 32 sur la figure 3) à l'extérieur de la carrosserie 100a et vient s'enclencher dans un organe de verrouillage correspondant 2212 de la première partie 221 du système d'attelage 22 du véhicule arrière 200 (voir les figures 9 à 12).

Après cette coopération entre la deuxième partie 222 du système d'attelage 22 du véhicule avant 100 et de la première partie 221 du système d'attelage du véhicule arrière 200, un attelage 223 complet est constitué (voir les figures 4, 11 et 14).

Un exemple plus précis d'un type de système d'attelage pouvant être utilisé est décrit plus loin en relation avec les figures 9 à 13.

A partir de ce moment, on comprend qu'un seul conducteur est requis et suffisant pour mener la suite des opérations et notamment pour la conduite du train de véhicules 300 que vont constituer les deux véhicules 100 et 200 à la fin du procédé d'attelage.

Afin de sécuriser cet attelage 223, c'est-à-dire pour éviter qu'il soit accessible à des personnes (ou des objets) qui pourraient être blessées (endommagés) en venant heurter l'attelage 223 et être coincé(e)s entre les deux véhicules 100 et 200, notamment pendant le mouvement de l'un ou de l'ensemble des deux véhicules 100 et 200, on prévoit des moyens de protection 23 de l'attelage 223.

À cet effet, à titre d'exemple préférentiel on prévoit que lesdits moyens de protection 23 comportent un soufflet 231 situé à l'arrière du véhicule et qui peut, en position déployée, entourer ledit attelage 223. Des explications complémentaires seront données ci-après en relation avec les figures 9 à 13.

Ainsi, le soufflet 231 forme une jupe de protection en accordéon apte à se déformer lorsque le véhicule avant 100 et le véhicule arrière 200 ne sont plus parallèles l'un à l'autre, c'est-à-dire lorsqu'un braquage est effectué.

Selon une disposition préférentielle (voir la figure 11), l'extrémité libre 2311 dudit soufflet 231 est reliée, via un cadre et un système de tringlerie rotulée à son extrémité, à ladite barre d'accrochage 2221 afin de suivre le mouvement d'avance ou de recul de la barre d'accrochage 2221 : ainsi, le déploiement et le repliage du soufflet 231 se font simultanément avec le mouvement longitudinal de la barre d'accrochage 2221, sans qu'il soit nécessaire d'effectuer une autre opération, et notamment la fixation de l'extrémité libre 2311 du soufflet 231.

À ce stade, à la fin du procédé d'attelage, on a formé, grâce à l'attelage 223 présent entre le véhicule avant 100 et le véhicule arrière 200, un train de véhicules 300 qui va pouvoir se déplacer d'un seul tenant au moyen de la commande de la seule cabine de pilotage 16 du véhicule avant 100 qui forme ainsi un véhicule menant, par rapport au véhicule arrière 200 qui forme un véhicule mené, sans chauffeur.

À cet effet, on prévoit que les véhicules 100 et 200 présentent en outre un système de récupération des données d'orientation des roues du véhicule avant 100 menant, au travers d'une lecture du déplacement du pignon 22141, par l'attelage 223, de façon à permettre au véhicule arrière 200, mené, de repasser dans les traces du véhicule menant 100 par reprise des informations de direction. Cela signifie que l'on donne aux véhicules menés 200 des consignes de direction (des essieux avant et arrière) correspondant au braquage du véhicule menant 100. De façon alternative, seul l'orientation de l'essieu avant des véhicules menés est commandée et dans ce cas, on s'autorise un déport entre chaque véhicule mené et celui qui le précède. Ce système de récupération de données est présenté plus loin en relation avec l'architecture logicielle de la figure 14.

Dans ce cas, on prévoit également avantageusement que les véhicules 100 et 200 présentent en outre un système de réplication des commandes et des informations de la cabine de pilotage 16 entre véhicule menant 100 et véhicule mené 200, via l'attelage 223. Parmi ces commandes et informations de la cabine de pilotage, qui sont transmis depuis le véhicule mené 200 vers le véhicule menant 100, ou inversement, on peut relever l'ensemble des informations et commandes relatives à la position, au pilotage ou à la signalisation intérieure ou extérieure, que ces informations soient électriques, analogiques ou numériques, pneumatiques ou de toute autre nature.

Dans une variante non représentée du procédé, au lieu et place des explications données précédemment concernant les premières étapes de la figure 1, on doit envisager le cas où c'est le véhicule mené 200 qui arrive avant le véhicule menant 100 à la station d'attelage ou au pôle de bifurcation pour atteler.

Dans ce cas, dans un premier temps, le véhicule 200, qui va former le véhicule mené, est aligné sur le tracé de référence 10, par un déplacement en mode guidé, grâce à la lecture de ce dernier par les détecteurs correspondants (faisceau de lecture 24), puis le véhicule 200 est stoppé à cet emplacement.

Ensuite, le véhicule 100 arrive par derrière et double le véhicule 200 puis se place également le long du tracé de référence 10 (faisceau de lecture 24) à l'avant du véhicule 200. Il rentre en contact avec le véhicule 200 pour lui demander d'avancer automatiquement après s'être assuré que le véhicule 200 était sécurisé, à savoir notamment que ses portes 20 sont fermées. La suite des opérations reprend les étapes présentées précédemment en relation avec la figure 2.

Selon une autre variante de réalisation non représentée, la cabine de pilotage 16 est transformable en espace passager 18, notamment par la condamnation de l'accès aux commandes du poste de pilotage, et par exemple par la condamnation de la porte côté chauffeur.

Si la description donnée correspond au cas où les véhicules menant 100 et mené 200 sont identiques, il faut comprendre que le procédé d'attelage qui vient d'être décrit précédemment peut s'appliquer sur des véhicules similaires, qui seraient seulement différents entre eux par exemple par leur longueur totale et/ou la longueur entre leurs essieux avant 12 et leur essieu arrière 14, ou encore qui présenteraient un ou plusieurs essieux intermédiaires supplémentaires.

De la même façon, on comprend qu'il est possible, au même emplacement ou après que le train de deux véhicules se soit déplacé sur un autre emplacement d'attelage d'appliquer ce procédé pour atteler un autre véhicule supplémentaire derrière le véhicule mené 200 et former un train de véhicules comprenant plus de deux véhicules similaires (identiques ou de longueurs différentes).

Dans tous les cas, le train de véhicules 300, tout comme chaque véhicule individuel non attelé 100 ou 200, peut se déplacer en mode autonome (commandé uniquement par le chauffeur du véhicule 100 avant qui a pris manuellement la commande) ou en mode guidé (à partir du système de guidage automatique du véhicule 100).

Pour la mise en oeuvre du procédé de désattelage de l'attelage 223 précédemment formé, on réalise les mêmes étapes en sens inverse à une station d'attelage ou à un pôle de bifurcation. Plus précisément, la suite d'étapes est simplifiée puisqu'on part d'une position initiale attelée où les véhicules 100 et 200 sont au départ reliés l'un à l'autre, mais on préférera un bon alignement entre les deux véhicules à désatteler.

Ainsi, la position initiale du procédé de désattelage correspond à la situation de la figure 4.

Ensuite, lors de la première étape du procédé de désattelage, on défait le verrouillage entre la barre d'accrochage 2221 de la deuxième partie 222 du système d'attelage 22 du véhicule avant 100 et l'organe de verrouillage 2212 de la première partie 221 du système d'attelage du véhicule arrière 200, avant de rétracter la barre d'accrochage 2221 qui pénètre à l'intérieur de (ou sous) la partie arrière de la carrosserie 100a du véhicule avant 100, correspondant à sa position escamotée. Lors de cette manoeuvre de rétractation de la barre d'accrochage 2221, on réalise simultanément le recul de l'extrémité libre 2311 du soufflet 231 qui se replie à l'arrière du véhicule avant 100.

Ensuite, le cas échant, on referme le capot de protection disposé devant la deuxième partie 222 du système d'attelage 22 du véhicule avant 100, pour empêcher la sortie de ou l'accès à la barre d'accrochage 2221.

Ainsi, à la fin du procédé de désattelage qui vient d'être décrit, le train de véhicules 300 a été défait et chacun des deux véhicules 100 et 200 reprend leur propre autonomie et peut repartir, sous la commande d'un chauffeur par véhicule, de son côté selon des trajets qui peuvent être maintenant différents.

Le procédé d'attelage, tout comme le procédé de désattelage, est mis en oeuvre par exemple, mais non nécessairement, à un emplacement formant des sites protégés par des barrières, ces emplacements ou stations d'attelage constituant ou étant situés à proximité des ou dans les pôles de bifurcation ou des noeuds (A; B; ..M) d'un circuit de circulation. Ces circuits de circulation peuvent présenter la forme d'un réseau arborescent ou en étoile, ces emplacements ou stations d'attelage se trouvant entre des zones de concentration de passagers et/ou d'objets différentes. Dans le cas de transport de passagers, on peut prévoir la présence d'un quai à l'emplacement de montée/descente des passagers, cet emplacement étant séparé ou étant physiquement le même que le pôle de bifurcation.

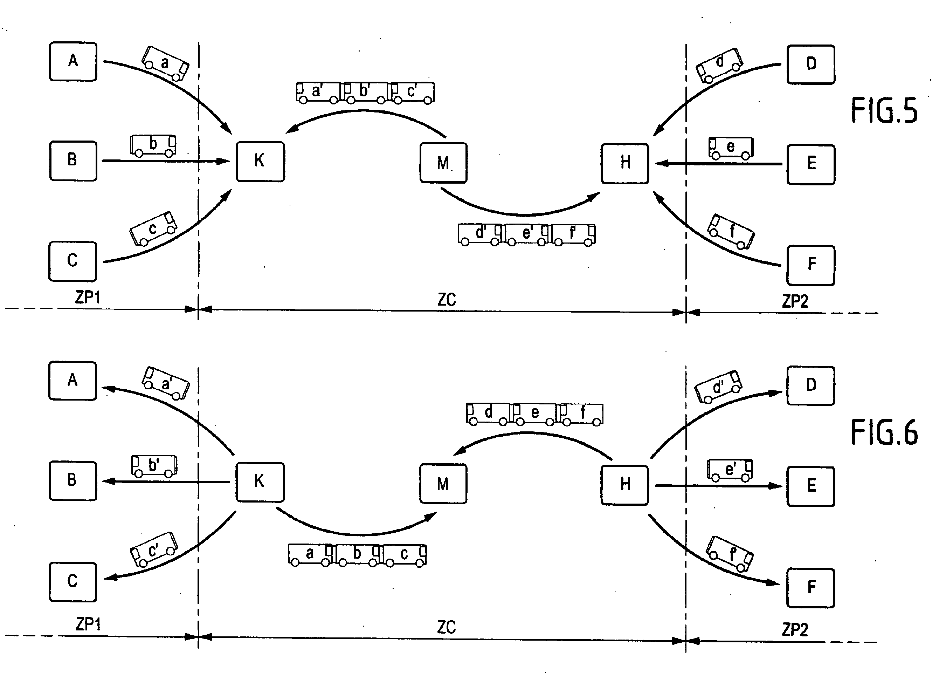

On se reportera maintenant sur les figures 5 à 8 qui représentent, à titre d'exemple, la façon dont les procédés d'attelage et de désattelage qui viennent d'être décrits précédemment peuvent être mis en oeuvre dans le cadre de la gestion d'un réseau de transport et/ou d'objets qui présente des concentrations de passagers et/ou d'objets différentes.

Sur ces figures 5 à 8, on a représenté une portion d'un tel réseau qui comporte une zone centrale de grande affluence ZC située entre deux zones périphériques de plus faibles affluences, respectivement ZP1 et ZP2.

Dans la zone centrale ZC, se trouvent trois pôles de bifurcations successifs K, M et H communs à trois lignes de transport et qui forment, dans cet exemple des stations de passagers. Dans la zone périphérique ZP1, se trouve trois stations A, B et C formant respectivement la station suivante de la station K de chacune des trois lignes de transport. Dans la zone périphérique ZP2, se trouvent trois stations D, E et F formant respectivement la station suivante de la station H de chacune des trois lignes de transport.

Dans cet exemple, douze véhicules identiques a à f et a' à f' du type des véhicules 100 et 200 précédemment décrits sont utilisés. Ces véhicules a à f et a' à f' présentent une taille Y correspondant à une faible capacité de passagers.

Dans un premier cas de figure, illustré sur les figures 5 et 6, on considère la gestion de la flotte de véhicules a à f et a' à f' aux heures de pointe, la forte affluence étant particulièrement marquée entre les stations K, M et H de la zone centrale ZC.

À un instant T de la rotation, les véhicules a à f sont stationnés respectivement aux stations A, B, C, D, E et F des zones périphériques ZP1 et ZP2. Les trains de véhicules attelés a' +b'+c' et d'+e'+f' composés de trois véhicules de taille Y sont stationnés à la station M de la zone centrale ZC.

Un premier mouvement de rotation depuis cet instant T est illustré sur la figure 5.

A l'instant suivant, correspondant à la fin de ce 1^{er} mouvement de leur rotation, les véhicules a, b et c s'arrêtent à la station K et ils sont attelés entre eux pour former un autre train de trois véhicules a+b+c, les véhicules d, e et f arrivent à la station H et ils sont attelés entre eux pour former un autre train de trois véhicules d+e+f. Au même moment, les deux trains de trois véhicules a'+b'+c' et d'+e'+f' sont respectivement stationnés à la station K et à la station H où on procède à leur désattelage complet pour libérer un à un chacun des véhicules a', b', c', d', e' et f'. Ensuite, on procède au deuxième mouvement de rotation visible sur la figure 6.

A l'instant suivant, correspondant à la fin de ce 2^{ème} mouvement de leur rotation, les véhicules a', b', c', d', e' et f' sont stationnés respectivement aux stations A, B, C, D, E et F des zones périphériques ZP1 et ZP2, les trains de véhicules attelés a+b+c et d+e+f sont stationnés à la station M de la zone centrale ZC.

On comprend qu'en continuant ce mouvement de rotation de ces autobus, à la fin du mouvement suivant (3^{éme} mouvement non représenté) les trains de véhicules attelés a+b+c et d+e+f sont stationnés respectivement à la station H et à la station K de la zone centrale ZC. Ensuite, ces trains de véhicules sont désattelés à cet emplacement et repartent individuellement de sorte qu'à la fin du mouvement suivant (4^{ème} mouvement non représenté) les véhicules a, b et c sont stationnés respectivement aux stations D, E et F de la zone périphérique ZP2.

Il faut encore quatre mouvements de rotation (qui se déroulent selon les explications précédentes en remplaçant les véhicules a, b, c, d, e et f par les véhicules a', b', c', d', e' et f' et inversement) pour revenir à la configuration de départ du cycle complet.

Ici, aux heures de pointe, on a donc en permanence douze autobus identiques a à f et a' à f' et 8 chauffeurs, tandis qu'un passager souhaitant se rendre de la station A à la station H, ou inversement, n'aura pas à changer de véhicule car il peut rester éventuellement dans le même véhicule qui est amené à aller jusqu'à une extrémité de la zone ZP2.

De plus, on comprend qu'aux heures de pointe, il y a toujours, à chaque station, un départ ou une arrivée d'un autobus, d'où une rotation rapide des passagers.

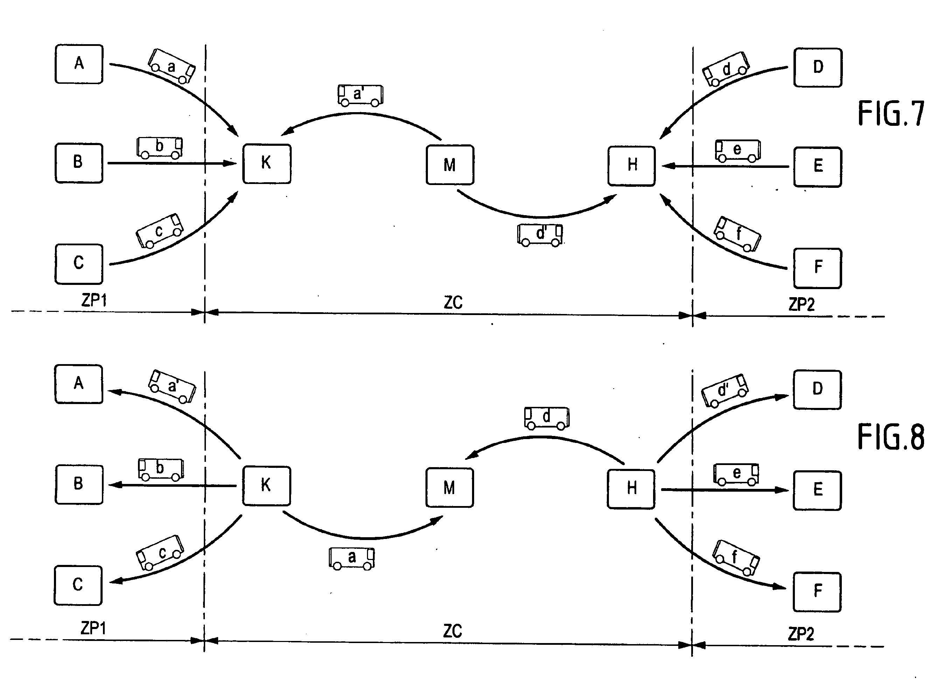

Dans un deuxième cas de figure, illustré sur les figures 7 et 8, on considère la gestion de la flotte des douze véhicules a à f et a' à f' aux heures creuses, c'est-à-dire à des moments de la journées où la forte affluence dans la zone centrale ZC est réduite et où la présence de véhicule autonome est suffisante dans la zone centrale ZC entre deux des trois stations K, M et H.

Dans ce cas, on utilise en même temps seulement huit des douze véhicules de la flotte, formés des véhicules a à f et a' et d' les autres véhicules b', c', e' et f' étant mis en attente ou bien dirigés vers d'autres zones du réseau de transport.

À un instant T de la rotation, les véhicules a à f sont stationnés respectivement aux stations A, B, C, D, E et F des zones périphériques ZP1 et ZP2, les véhicules a' et d' désatellés sont stationnés à la station M tandis les autres véhicules non attelés (b', c', e' et f') sont stationnés sur des points du réseau.

Un premier mouvement de rotation depuis cet instant T est illustré sur la figure 7.

A l'instant suivant, correspondant à la fin de ce 1^{er} mouvement de leur rotation, les véhicules non attelés a, b, c et a' sont stationnés à la station K de la zone centrale ZC et les véhicules non attelés d, e, f et d' sont stationnés à la station H de la zone centrale ZC.

Ensuite, on procède au deuxième mouvement de rotation visible sur la figure 8.

A l'instant suivant, correspondant à la fin de ce 2^{ème} mouvement de leur rotation, les véhicules non attelés b et c d'une part et e et f d'autre part sont retournés en stationnement à leur position précédente, respectivement aux stations B, C, E et F des zones périphériques ZP1 et ZP2 et les véhicules non attelés a et a' d'une part et d et d' d'autre part se sont croisés respectivement aux stations K et H de la zone centrale ZC, et ces quatre véhicules a, a', d et d' se retrouvent respectivement stationnés aux stations M, A, M et D.

Ce procédé de rotation se poursuit de la même façon, les véhicules non attelés a, a', d et d' parcourant la partie du réseau s'étendant entre deux extrémités (stations A et D) de ce réseau et couvrant à la fois les deux zones périphériques ZP1 et ZP2 et la zone centrale ZC. En parallèle, les véhicules non attelés b, c, e et f font la navette entre deux stations (respectivement B et K, C et K, E et H, F et H), l'une de ces deux stations appartenant à la bordure de la zone centrale ZC et l'autre de ces deux stations appartenant à la bordure d'une zone périphérique ZP1 ou ZP2.

Ici, aux heures creuses, on a donc en permanence huit autobus et huit chauffeurs, tandis qu'un passager souhaitant se rendre de la station A au moins à la station M voire à la station H, ou inversement, n'aura pas à changer de véhicule et peut rester dans le véhicule a ou a' (d ou d' selon la position de la rotation). Un passager souhaitant se rendre de la station B de la zone périphérique ZP1 à la station E de la zone périphérique ZP2 devra changer de véhicule en K et en H, à la limite de la zone centrale ZC.

Dans ce cas, on comprend qu'aux heures creuses, il y a moins de rotations et donc une attente plus importante à chaque station.

Ce type de réseaux conjugue de nombreux avantages.

Ainsi, on utilise des véhicules de petite taille Y répondant à la demande aux heures pleines sur la partie centrale par attelage des véhicules, tout en limitant le nombre de chauffeurs et les véhicules de plus grande taille. Il n'y a pas de changement de véhicule pour les passagers (rupture de charge) pour un parcours réalisé aux heures pleines.

Aux heures creuses, on limite le nombre des véhicules circulant sur le réseau, dans la zone centrale ZC et dans les zones périphériques ZP1 et ZP2 (meilleure efficacité énergétique). Egalement, on dispose d'un parc de véhicules homogènes, ce qui facilite notamment la formation (chauffeurs et mécaniciens), la maintenance et la gestion de ce parc de véhicules.

On peut bien entendu envisager une variante (non représentée) consistant en une solution de gestion de véhicules, intermédiaire entre le premier cas représenté sur les figures 5 et 6 et le deuxième cas représenté sur les figues 7 et 8, dans lequel dans la zone centrale ZC ce sont des trains de deux véhicules attelés qui circulent.

On se reportera maintenant aux figures 9 à 13 qui illustrent un mode de réalisation possible pour le système d'attelage 22.

Comme on le voit sur les figures 9 à 11, sur la première partie 221 du système d'attelage 22 du véhicule arrière 200, située à l'avant de ce véhicule 200, on a prévu une pièce 2211 présentant un logement en forme d'entonnoir, formant un guide dont le fond, peu profond, peut recevoir la portion d'extrémité 22212 de la barre d'accrochage 2221.

Un organe de verrouillage 2212 (voir les figures 10 et 11) formé d'une broche actionnable à distance, par exemple par des moyens pneumatiques, est logé dans la pièce 2211 et peut passer d'une position rétractée (figures 10 et 11) à une position sortie (non représentée) dans laquelle elle coopère avec un oeil 22210 situé dans la portion d'extrémité 22212 de la barre d'accrochage 2221 pour verrouiller mécaniquement l'attelage formé 223.

Pour la deuxième partie 222 du système d'attelage 22 du véhicule avant 100, située à l'arrière de ce véhicule 100, la barre d'accrochage 2221, qui s'étend selon la direction horizontale longitudinale parallèle à l'axe des x, est montée à l'extrémité d'un manchon 2222 qui la relie à un système articulé 2223 lui-même relié au châssis 100b du véhicule 100 (voir la figure 12).

Ce système articulé 2223 comporte un premier cadre 2224 et un deuxième cadre 2225 emboîtés l'un dans l'autre et entourant le manchon 2222, qui permettent respectivement un mouvement de rotation du manchon 2222, et donc de la barre d'accrochage 2221, autour de la direction verticale parallèle à l'axe des z (mouvement en lacet) et autour de la direction horizontale transversale parallèle à l'axe des y (mouvement en piqué).

Plus précisément, le premier cadre 2224, intérieur, est disposé dans le deuxième cadre 2225, extérieur, auquel il est relié par deux tronçons d'une tige verticale 2226 montée de façon rigide au premier cadre 2224 et à pivot par rapport au deuxième cadre 2225. Cette tige verticale 2226 peut être commandée en rotation autour de la direction verticale parallèle à l'axe des z par un premier ensemble de secteur de roue dentée 22242 et de pignon 22241, le mouvement du secteur denté 22242, qui est monté pivotant par rapport au deuxième cadre 2225, étant commandé par un vérin 22243 relié au secteur denté 22242 et au deuxième cadre 2225, tandis que le secteur denté 22242 est solidaire de l'extrémité de la tige 2226.

De plus, le deuxième cadre 2225 est mobile en rotation autour de la direction horizontale transversale parallèle à l'axe des y, au moyen de deux extensions latérales 22250 (figures 9, 12 et 13) formant des arbres montés en rotation par rapport au châssis 100b. Ces deux extensions latérales 22250 sont solidaires du deuxième cadre 2225 et elles peuvent être commandées en rotation autour de la direction horizontale transversale parallèle à l'axe des y par un deuxième ensemble de secteur de roue denté 22252 et de pignon 22251, le mouvement du secteur denté 22252 étant commandé par un vérin 22253 monté sur le châssis 100b, tandis que le secteur denté 22252 est solidaire de l'extrémité de l'une des deux extensions latérales 22250 (voir figures 9 et 13).

Pour permettre le mouvement de déploiement longitudinal réversible de la barre d'accrochage 2221, et donner un troisième degré de liberté au système articulé 2213, on utilise deux vérins 22221 montés de façon parallèle dans le manchon 2222 qui, dans le mode de réalisation représenté présente une section transversale en forme de I (voir figure 13). Le cylindre de ces deux vérins 22221 est relié au cadre intérieur 2224 au moyen de l'axe transversal 22222 de section carrée, qui est avantageusement relié au cylindre du vérin correspondant par une articulation de type pivot ou rotule (non représentée). L'axe transversal 22222 de section carrée traverse une ouverture latérale 22223 dans chacune des deux parois latérales du manchon 2222. La tige de ces deux vérins 22221 est reliée au fond du manchon 2222 par une articulation 2222a de type pivot.

Pour permettre le guidage longitudinal du manchon 2222 par rapport au cadre 2224, on opère, à l'aide des vérins 22221, un glissement du manchon 2222 sur des ensembles roulants 22224 montés par paire à l'avant et à l'arrière du cadre 2224, au dessus et en dessous du manchon 2222, chaque ensemble roulant comprenant un rouleau transversal 22226, dont les extrémités sont montés pivotantes par rapport au cadre 2224, et une paire de galets 22227.

A ce stade, il faut noter que les vérins 22221 permettent donc non seulement de commander le mouvement de la barre d'accrochage 2221 lors de la procédure d'attelage ou de désattelage, mais encore qu'ils autorisent au sein de l'attelage 223 for.né, l'absorption d'une certaine mobilité longitudinale de la barre d'accrochage 2221 ce qui leur fait jouer un rôle d'amortisseur que ne possède pas un attelage rigide qui doit absorber mécaniquement les à-coups pendant le déplacement du train de véhicules 300.

Pour permettre de donner un peu de jeu en rotation à l'extrémité libre de la barre d'accrochage 2221, celle-ci est en fait réalisée en deux parties fonctionnelles pouvant tourner l'une par rapport à l'autre autour de la direction longitudinale. Il y a un tube 22211 qui est relié rigidement à l'extrémité libre du manchon 2222 en prolongeant la paroi frontale 22225 du manchon 2222. La barre d'accrochage 2221 comporte en outre une portion d'extrémité 22212 comprenant l'oeil 22210. La portion d'extrémité 22212 est solidaire d'une tige arrière 22213 logée à l'intérieur du tube 22211 et qui est montée en rotation sur la paroi frontale 22225 du manchon 2222.

Deux ressorts 22217 et 22218 montés en opposition sont fixés d'une part à la tige 22213 et d'autre part, pour l'un à la paroi frontale 22225, et pour l'autre au tube 22211, ce qui engendre une force de rappel tendant à ramener la barre d'accrochage 22211 dans la même orientation angulaire autour de la direction longitudinale.

La portion d'extrémité 22212 entoure une portion avant du tube 22211 par une portion arrière en forme de manchon qui se termine par un épaulement : c'est à cet emplacement qu'est montée une bague 2313 dont le rôle est décrit plus loin en relation avec le soufflet 231.

La portion d'extrémité 22212 est prolongée en dehors du tube 22213 par une tête d'accrochage 22214 comprenant l'oeil 22210 et une première broche de connexion 22215 à l'extrémité libre de la tête d'accrochage 22214.

Cette première broche de connexion 22215 va venir en coopération avec une deuxième broche de connexion 22115 disposée au fond de la pièce 2211 (voir les figures 10 et 11), afin de permettre une connexion électrique, par exemple de type multiplex, et donc une communication entre les deux véhicules 100 et 200, au niveau de l'attelage 223 comme il sera décrit ci-après en relation avec la figure 14.

Ces première broche de connexion 22215 et deuxième broche de connexion 22115 peuvent en outre constituer des systèmes de mise en alignement ou d'autoalignement des deux parties de l'attelage 223.

Afin de faciliter le bon positionnement angulaire relatif entre la première broche de connexion 22215 et la deuxième broche de connexion 22115, la tête d'accrochage 22214 est pourvue sur la surface de son extrémité d'une double nervure 22216 (voir la figure 9) apte à coopérer avec une double rainure de guidage 22116 correspondante disposée à l'intérieur de la pièce 2211. Cette double rainure de guidage 22116 forme une rampe de guidage pour amener chaque nervure 22216 en premier lieu dans la bonne orientation autour de la direction longitudinale parallèle à l'axe des x, et en second lieu pour maintenir cette orientation pendant la fin du déplacement longitudinal de la barre d'accrochage 2221 jusqu'à la position attelée où l'organe de verrouillage 2212 coopère avec l'oeil 22210.

De plus, afin d'absorber tous les mouvements de l'attelage 223, la première partie 221 du système d'attelage 22 comporte un système articulé 2213 similaire au système articulé 2223 de la deuxième partie 222 décrit précédemment.

Plus précisément, la pièce 2211 est montée dans un premier cadre 2214, intérieur, logé dans un deuxième cadre 2215, extérieur avec un montage articulé, similaire à celui des cadres 2224 et 2225 pour permettre à la pièce de guidage 2211 de tourner autour de la direction verticale parallèle à l'axe des z (mouvement en lacet) et autour de la direction horizontale transversale parallèle à l'axe des y (mouvement en piqué).

Plus précisément, le premier cadre 2214, intérieur, est disposé dans le deuxième cadre 2215, extérieur, auquel il est relié par deux tronçons d'une tige verticale 2216 montée de façon rigide au premier cadre 2214 et à pivot par rapport au deuxième cadre 2215. Cette tige verticale 2216 peut être commandée en rotation autour de la direction verticale parallèle à l'axe des z par un premier ensemble de secteur de roue dentée 22142 et de pignon 22141, le mouvement du secteur denté 22142, qui est monté pivotant par rapport au deuxième cadre 2215, étant commandé par un vérin 22143 relié au secteur denté 22142 et au deuxième cadre 2215, le secteur denté 22142 étant solidaire de l'extrémité de la tige 2216.

De plus, le deuxième cadre 2215 est mobile en rotation autour de la direction horizontale transversale parallèle à l'axe des y, au moyen de deux extensions latérales 22150 (figures 9, 12 et 13) formant des arbres montés en rotation par rapport au châssis 100b. Ces deux extensions latérales 22150 sont solidaires du deuxième cadre 2215 et elles peuvent être commandées en rotation autour de la direction horizontale transversale parallèle à l'axe des y par un deuxième ensemble de secteur de roue denté 22152 et de pignon 22151 le mouvement du secteur denté 22152 étant commandé par un vérin 22153 monté sur le châssis 100b, tandis que le secteur denté 22152 est solidaire de l'extrémité de l'une des deux extensions latérales 22150 (voir figures 9 et 13).Un tel système d'attelage 22 permet de conserver un jeu, limité, dans les trois directions de déplacement possibles entre les deux véhicules 100 et 200 du train de véhicules 300, à savoir le lacet, le tangage et le roulis.

On voit également sur les figures 10 et 11, le passage du soufflet 231 de la deuxième partie 222 du système d'attelage 22 du véhicule avant 100 depuis sa position repliée de la figure 10, à sa position déployée de la figure 11 où son extrémité libre 2311 qui a suivi le mouvement d'avance longitudinale de la barre d'accrochage 2221 vient se placer contre une zone de réception 200c de la carrosserie 200a du véhicule arrière 200, de forme complémentaire, grâce à un cadre supportant cette extrémité libre 2311 et qui est relié par un système de tringlerie 2312 rotulée à son extrémité à la barre d'accrochage 2221 par une bague rainurée 2313, de type bague de roulement. Ainsi, lors de son déploiement, l'extrémité libre 2311 du soufflet 231 garde la bonne orientation pour venir se loger par complémentarité de forme avec la zone de réception 200c de la carrosserie 200a du véhicule arrière 200.

Avantageusement, cette bague 2313 peut s'ouvrir et s'écarter autour de la tête d'accrochage 22214 afin de permettre qu'en position rentrée ou escamotée, la barre d'accrochage 2221 ne fasse plus saillie en dehors de la carrosserie 100a.

Le système d'attelage 22 qui vient d'être décrit comme un mode de réalisation possible de l'invention, est un système d'attelage de type mécanique. Cependant, dans le cadre de la présente invention ce système d'attelage 22 mécanique peut être complété par un attelage de type virtuel (non représenté) qui est utilisé à titre principal, le système d'attelage 22 servant comme solution alternative en cas de problème. Selon une autre possibilité, l'attelage virtuel est utilisé à titre secondaire en cas de problème avec le système d'attelage 22 mécanique utilisé alors à titre principal. Par système d'attelage virtuel, on entend une commande par le véhicule menant 100 d'un ou de plusieurs véhicules menés 200, sans lien physique entre ces véhicules 100 et 200.

On se reporte maintenant à la figure 14 qui représente l'architecture logicielle pouvant être utilisée pour les échanges d'information et les commandes entre les véhicules pendant et après l'opération d'attelage.

De façon avantageuse, comme il a été présenté précédemment, le système d'attelage proposé permet le transfert de données entre les véhicules 100 et 200 grâce aux broches de connexion 22115 et 22215 intégrées à l'attelage 223.

On peut aussi prévoir, en plus et de façon optionnelle, une communication « sans fil » par onde radio ou par tout autre moyen de communication sans fil. Dans l'une ou l'autre des solutions, on préférera une communication sécurisée par un encryptage.

Entre les véhicules 100 et 200 situés à proximité et l'un derrière l'autre, on prévoit une communication en dehors des période attelées, notamment dans la phase préliminaire à la réalisation de l'attelage proprement dit : dans ce cas, sans liaison physique encore réalisée, c'est par des ondes radio entre les modules radio MR que la communication est rendue possible.

Chaque véhicule 100 et 200 dispose de la même architecture logicielle mais sur la figure 14, on a représenté les parties des véhicules 100 et 200 attelés entre eux, qui sont utilisées tout particulièrement dans le cadre de l'invention.

En premier lieu, on trouve des éléments existants déjà dans un certain nombre de véhicules de transport, en particulier un contrôleur CT relié au tableau de bord TB duquel il reçoit des commandes et auquel il transmet des informations en provenance de l'ordinateur de bord OB et de l'ordinateur de guidage OG, et éventuellement d'un ordinateur sécuritaire OS.

L'ordinateur de bord OB est relié aux trois réseaux multiplexés du véhicule (généralement de type protocole de communication en réseau CAN SAE J1939) dont il reçoit et auxquels il transmet des informations, à savoir :
- le réseau multiplexé de signalisation comprenant notamment les informations d'état des feux et autres moyens de signalisation audio ou visuels, tels que les feux de détresse,
- le réseau multiplexé de châssis comprenant notamment les informations d'état (ouvert ou fermé) des portes avant et arrière, et
- le réseau multiplexé de chaîne de transmission comprenant notamment les informations d'état du moteur, de la boîte de vitesse et des freins.

L'ordinateur de guidage OG gère les informations de tous les organes de guidage parmi lesquels la position du volant et/ou de l'essieu avant 12 représentatif de la direction du véhicule concerné, les informations provenant de caméras telles que des caméras placées au niveau des portes de véhicules attelées mais aussi à l'arrière du véhicule 100 et/ou au niveau de l'avant du véhicule 200 et si possible au niveau de l'attelage 22 ou de tout autre moyen de guidage tel qu' un système optique ou de radio fréquence.

L'ordinateur sécuritaire OS est notamment relié aux détecteurs d'obstacles situés à l'avant du véhicule (faisceau 30 sur la figure 2).

On peut considérer que l'ordinateur de bord OB, l'ordinateur de guidage OG et l'ordinateur sécuritaire OS forment des modules que nous appellerons « non critiques » et qui peuvent être présents dans des véhicules classiques.

En second lieu, on trouve des éléments particuliers au système conforme à l'invention, parmi lesquels :
- un ordinateur d'attelage OA qui à tout moment connaît la position de l'attelage 223 formé ou en cours de formation entre le véhicule menant 100 et le véhicule mené 200, à savoir
   - pour la partie arrière du véhicule : la position d'avancement longitudinale de la barre d'accrochage 2221, la position en piquet (inclinaison vers le haut ou vers le bas par rapport à l'horizontal), la position en lacet (inclinaison vers la droite ou vers la gauche par rapport à la verticale de la barre d'accrochage 2221 et il actionne les secteurs dentés 22252 et 22242 aux moyens des vérins 22253 et 22243 et,
   - pour la partie avant du véhicule : il connait la position de l'organe de verrouillage 2212 (verrou) et actionne les secteurs dentés 22142 et 22152 aux moyens des vérins 22143 et 22153 et,
   - la vérification de la situation connectée ou non entre les broches de connexion 22115 et 22215,
- un ordinateur des essieux OE qui connaît, à tout moment, la position angulaire de l'essieu avant 12 et la position angulaire de l'essieu arrière 14,
- un ordinateur de visualisation OV relié aux caméras intérieure et/ou extérieure telles qu'une caméra placée à l'extérieur et à l'arrière du

véhicule et qui est dirigée vers l'arrière, une caméra visualisant l'état ouvert ou fermé de la porte avant et une caméra visualisant l'état ouvert ou fermé de la porte arrière. Ces images de tous les véhicules formant un train de véhicules sont accessibles au conducteur du véhicule menant 100, via un écran E1 relié aux caméras internes (visualisation des portes de tous les véhicules) et via un écran E2 relié aux caméras externes (visualisation de l'arrière du véhicule menant 100 et de l'avant du véhicule mené 200 en cours d'attelage),
- un superviseur SP, formant un ordinateur de contrôle de l'intégrité des véhicules, un ordinateur de sécurisation des données et un ordinateur de filtrage des actions, est relié au contrôleur CT et à une commande manuelle par exemple sous la forme d'un joystick JS, qui permet de contrôler l'avancement du véhicule mené supplémentaire 200 en cours d'attelage et de corriger l'orientation de la barre d'accrochage 2221 en cours d'attelage.

Le superviseur SP est également relié à la première broche de connexion 22115 de la première partie 221, avant, du système d'attelage 22 et à la deuxième broche de connexion 22215 de la deuxième partie 222, arrière, du système d'attelage 22.

De plus, le superviseur est relié à l'ordinateur de visualisation OV, à l'ordinateur d'attelage OA et à l'ordinateur des essieux OE.

En particulier, l'ordinateur des essieux OE informe le superviseur SP du type d'asservissement entre les essieux 12 et 14 du véhicule menant 100 et les essieux 12 et 14 du véhicule mené 200, ce type d'asservissement (par exemple suivi ou non suivi) pouvant être modifié et commandé par le superviseur SP.

Ainsi, on peut considérer que l'ordinateur de visualisation OV, l'ordinateur d'attelage OA et l'ordinateur des essieux OE font partie des modules que nous appellerons « critiques » et qui sont particuliers aux véhicules conformes à l'invention. Ces modules critiques ont notamment pour rôle, comme il ressort des explications précédentes, de préparer les véhicules 100 à la procédure d'attelage notamment par une aide à l'accostage pendant la phase d'approche et également pendant le pilotage attelé du train de véhicules 300 formé.

Il faut comprendre que le contrôleur CT forme un ordinateur de bord des actionneurs, et plus précisément il constitue la partie logicielle qui gère normalement tous les organes, c'est-à-dire qui vérifie l'état des différents organes du véhicule et qui autorise la commande demandée depuis le tableau de bord par le conducteur, notamment lorsque chaque véhicule 100 et 200 est autonome et, s'agissant du véhicule menant 100, après la réalisation de l'attelage avec le véhicule mené 200.

Notamment pendant la procédure d'attelage, le superviseur, qui est prioritaire sur le contrôleur CT, prend en considération les demandes du conducteur (telles que celles provenant de la pédale d'accélération, de frein, le volant, le levier de vitesse, un bouton d'ouverture de porte...etc) et vérifie que cette demande (par exemple la demande d'avance du véhicule arrière 200) est compatible avec la situation des différents organes dont le contrôleur est informé via les différents ordinateurs OB, OA, OG, et OS.

Dans cette architecture, le véhicule menant 100 est un véhicule maître et tout véhicule mené 200 est un véhicule esclave.

Il faut noter, comme il apparaît de la figure 14, que pour des raisons sécuritaires, certaines liaisons filaires sont doublées tout comme on a doublé les calculateurs du superviseur SP et du contrôleur CT.

Il faut relever que le système d'attelage et le procédé d'attelage qui sont présentés ici diffèrent de ceux utilisés dans le ferroviaire notamment par le fait que contrairement aux rames de certains trains qui sont symétriques entre l'avant et l'arrière, ici on conserve la particularité d'un véhicule terrestre de présenter un sens d'avancement privilégié et une seule cabine de commande, située à l'avant du véhicule Et en outre, à la différence du ferroviaire, les véhicules sont amenés à travailler dans des plans différents compte-tenu de la non rectitude des voies et du désalignement du véhicule.

## Revendications

1. Véhicule (100; 200) autonome sur roues muni d'une cabine de pilotage (16) et d'un espace de transport (18) de passagers et/ou d'objets, comportante:
- au moins un essieu avant (12) directeur,
- un système d'attelage (22) escamotable comprenant une première partie (221) située à l'avant du Véhicule (100; 200) et une deuxième partie (222) située à l'arrière du véhicule (100; 200), la première partie (221) d'un véhicule (100; 200) étant apte à coopérer avec la deuxième partie (222) d'un autre véhicule (100; 200), lorsque le système d'attelage (22) est sorti, afin de relier les véhicules (100; 200) en formant entre eux un attelage (223), et
**caractérisé en ce qu'**il comporte en outre des moyens de protection (23) dudit attelage (223), entourant ledit attelage.

2. Véhicule (100; 200) selon la revendication 1, **caractérisé en ce que** ladite deuxième partie (222) du système d'attelage (22) peut être activée de façon à passer d'une position escamotée vers une position sortie dans laquelle ladite deuxième partie (222) est apte à coopérer avec ladite première partie (221) du système d'attelage (22) d'un autre véhicule (100; 200) en formant entre eux un attelage (223).

3. Véhicule (100; 200) selon la revendication 2, **caractérisé en ce que** ladite deuxième partie (222) du système d'attelage (22) présente une barre d'accrochage (2221) pouvant passer de façon automatique de sa position escamotée à sa position sortie et inversement.

4. Véhicule (100; 200) selon la revendication 2 ou 3, **caractérisé en ce que** ledit système d'attelage (22) présente en outre des moyens de guidage du déplacement de la deuxième partie (222) entre la position escamotée et la position sortie.

5. Véhicule (100; 200) selon la revendication 2 ou 3, **caractérisé en ce que** ledit système d'attelage (22) présente en outre des moyens de guidage (22216, 22116) permettant, lors du passage de la deuxième partie (222) dans la position sortie, de guider sa venue en coopération avec ladite première partie (221) du système d'attelage (22).

6. Véhicule (100; 200) selon l'une quelconque des revendications précédentes, **caractérisé en ce qu'**il comporte en outre un système de guidage immatériel.

7. Véhicule (100; 200) selon la revendication 6, **caractérisé en ce que** ledit système de guidage immatériel utilise un tracé de référence (10) sur la voie de circulation et des détecteurs d'obstacle.

8. Véhicule (100; 200) selon l'une quelconque des revendications précédentes, **caractérisé en ce que** le système d'attelage (22) comporte des moyens de liaisons autorisant un jeu selon au moins trois degrés de liberté.

9. Véhicule (100; 200) selon l'une quelconque des revendications précédentes, **caractérisé en ce que** lesdits moyens de protection (23) dudit attelage (223) sont aptes à passer d'une position repliée à une position déployée dans laquelle ledit attelage (223) est entouré par les moyens de protection (23).

10. Véhicule (100; 200) selon la revendication 9, **caractérisé en ce que** lesdits moyens de protection (23) comportent un soufflet situé à l'arrière du véhicule (100; 200) et qui peut, en position déployée, entourer ledit attelage (223).

11. Véhicule (100; 200) selon la revendication 10 et la revendication 3, **caractérisé en ce que** l'extrémité libre dudit soufflet est reliée à ladite barre d'accrochage (2221) afin de suivre le mouvement de la barre d'accrochage (2221).

12. Véhicule (100; 200) selon l'une quelconque des revendications précédentes, **caractérisé en ce qu'**il présente en outre un système de récupération des données d'orientation des roues du véhicule (100; 200) menant, par l'attelage, de façon à permettre au véhicule (100; 200) arrière, mené, de repasser dans les traces du véhicule (100; 200) menant.

13. Véhicule (100; 200) selon l'une quelconque des revendications précédentes, **caractérisé en ce qu'**il présente en outre un système de réplication des commandes et des informations de la cabine de pilotage (16) entre véhicule menant (100) et véhicule mené (200), via l'attelage (223).

14. Véhicule (100; 200) selon l'une quelconque des revendications précédentes, **caractérisé en ce qu'**il comporte en outre des moyens de couverture du système d'attelage (22) escamoté.

15. Véhicule (100; 200) selon l'une quelconque des revendications précédentes, **caractérisé en ce que** la cabine de pilotage (16) est transformable en espace passager, notamment par la condamnation de l'accès aux commandes.

16. Véhicule (100; 200) selon l'une quelconque des revendications précédentes, **caractérisé en ce qu'**il comporte en outre une architecture logicielle qui comprend un ordinateur d'attelage (OA) et un ordinateur des essieux (OE).

17. Véhicule (100; 200) selon la revendication 16, **caractérisé en ce qu'**il présente en outre des moyens (22115 et 22225) permettant à l'ordinateur d'attelage (OA) de connaître la situation du système d'attelage (22) dudit véhicule, et notamment la formation d'un attelage (223), avec un autre véhicule.

18. Véhicule (100; 200) selon la revendication 17, **caractérisé en ce que** ladite architecture logicielle comprend en outre un superviseur (SP) qui permet, via l'ordinateur d'attelage (OA), de vérifier la position verrouillée de l'attelage (223) entre deux véhicules (100, 200), afin d'avertir si cette position verrouillée est inexistante.

19. Véhicule (100; 200) selon l'une quelconque des revendications 1 à 18, **caractérisé en ce qu'**il comporte en outre un essieu arrière directeur (14).

20. Procédé d'attelage entre au moins deux véhicules (100; 200) selon l'une quelconque des revendications 1 à 19, comportante les étapes suivantes :
a) on déplace un premier véhicule formant le véhicule menant (100) en un emplacement d'accostage,
b) on déplace un autre véhicule formant un véhicule mené (200) de façon à l'aligner derrière le véhicule menant (100), à une distance d'accostage prédéterminée,
c) on active la deuxième partie (222) du système d'attelage (22) du véhicule menant (100) et la première partie (221) du système d'attelage (22) du véhicule mené (200) de façon à réaliser entre eux un attelage (223), **caractérisé en ce qu'**il comporte en outre une étape d) selon laquelle on active les moyens de protection (23) dudit système d'attelage, situés à l'amère du véhicule menant (100), afin d'empêcher tout contact entre l'attelage (223) et un élément extérieur au train de véhicules (100; 200) ainsi formé.

21. Procédé d'attelage selon la revendication 20, **caractérisé en ce qu'**il comporte en outre, pour chaque véhicule (mené supplémentaire (200), des étapes supplémentaires correspondant aux étapes b) à d) et dans lesquelles :
b') le véhicule mené supplémentaire est déplacé de façon à être aligné derrière le véhicule mené précédemment attelé, à une distance d'accostage prédéterminée, puis
c) on active la deuxième partie (222) du système d'attelage (22) du véhicule mené supplémentaire et la première partie (221) du système d'attelage (22) du véhicule mené précédemment attelé qui le précède de façon à réaliser entre eux un attelage (223) supplémentaire et
d') on active les moyens de protection (23) dudit attelage (223) supplémentaire, situés à l'arrière du véhicule mené précédemment attelé, afin d'empêcher tout contact entre l'attelage supplémentaire et un élément extérieur au train de véhicules ainsi formé.

22. Procédé d'attelage selon l'une quelconque parmi les revendications 20 à 21, **caractérisé en ce que** pendant l'étape b) ou b') de déplacement du véhicule mené (200), on utilise un système de guidage immatériel.

23. Procédé d'attelage selon la revendication 22, **caractérisé en ce que** ledit système de guidage immatériel utilise un tracé de référence (10) sur la voie de circulation et des détecteurs d'obstacle.

24. Procédé de gestion d'un réseau de transport de passagers et/ou d'objets utilisant des véhicules (100; 200) selon l'une quelconque des revendications 1 à 19, **caractérisé en ce qu'**il met en oeuvre les étapes suivantes:
- on conduit au moins deux véhicules (100; 200) et/ou ensembles de véhicules (100; 200) provenant d'origines différentes (A,B, C, D, E, F...) vers un ou des pôles de bifurcation (K, H..) du réseau qui sépare une zone centrale (ZC) de grande affluence d'une zone périphérique (ZP1, ZP2) de moindre affluence, et
- on réalise audit pôle de bifurcation le procédé d'attelage selon la revendication 20, 21 ou 22 entre ces véhicules (100; 200) pour former un train de véhicules (100; 200) à un seul conducteur lorsque lesdits véhicules (100; 200) se dirigent depuis la zone périphérique (ZP1, ZP2) en direction de la zone centrale (ZC).

25. Train de véhicules (300) utilisant des véhicules (100; 200) selon l'une quelconque des revendications 1 à 19, comportante un seul véhicule menant (100) et au moins un véhicule mené (200), situé derrière le véhicule menant (100), lesdits véhicules (100; 200) étant reliés l'un à l'autre par ledit attelage (223), **caractérisé en ce que** le contact, dudit attelage (223) avec un élément extérieur aux véhicules (100; 200) _{;} est empêché par lesdits moyens de protection (23).

26. Procédé de désattelage du dernier attelage (223) d'un train de véhicules (300) selon la revendication 25, comportant au moins un dernier véhicule mené (200) et un véhicule menant (100), **caractérisé en ce qu'**il comporte les étapes suivantes :
a) on active les moyens de protection (23) du dernier attelage (223) situé entre le dernier véhicule mené (200) et le véhicule (100; 200) qui le précède afin de dégager ledit dernier attelage (223) ;
b) on active la deuxième partie (222) du système d'attelage (22) du dernier véhicule mené (200) et la première partie (221) du système d'attelage (22) du véhicule (100; 200) qui le précède de façon à défaire le dernier attelage (223) et à escamoter ladite deuxième partie (222) du système d'attelage (22), ce par quoi le dernier véhicule (200) mené est séparé du train de véhicules (300) et forme un véhicule (200) autonome et un train de véhicules (100; 200) restants, et
c) on déplace ledit véhicule (200) autonome ou le train de véhicules (100; 200) restants.

27. Procédé de désattelage selon la revendication 26, pour un véhicule selon la revendication 14, **caractérisé en ce qu'**il comporte en outre, après l'étape b), une étape supplémentaire dans laquelle on active lesdits moyens de couverture (2222) du dernier véhicule (100; 200) du train de véhicules (100; 200) restants, pour cacher la deuxième partie (222), escamotée, du système d'attelage (22).

28. Procédé de gestion d'un réseau de transport de personnes et/ou d'objets utilisant des véhicules (100; 200) selon l'une quelconque des revendications 1 à 19, **caractérisé en ce qu'**il met en oeuvre les étapes suivantes :
- on conduit un train de véhicules (300) comprenant au moins deux véhicules (100; 200) attelés vers un pôle de bifurcation (H, K..) de la zone centrale (ZC) d'un réseau qui sépare une zone centrale (ZC) de grande affluence d'une zone périphérique (ZP1, ZP2) de moindre affluence, et.
- on réalise entre ces véhicules (100; 200), audit pôle de bifurcation (H, K..), le procédé de désattelage selon la revendication 256 ou 276 pour défaire un train de véhicules (300) à un seul conducteur provenant de la zone centrale (ZC) et obtenir plusieurs véhicules (100; 200) individuels autonomes et/ ou ensembles de véhicules (100; 200) autonomes se dirigeant en direction de la zone périphérique (ZP1, ZP2) selon différents trajets vers une autre station (A, B, C, D, E, F...).

29. Procédé de gestion d'un réseau de transport de personnes et/ou d'objets utilisant des véhicules (100; 200) selon l'une quelconque des revendications 1 à 19, **caractérisé en ce qu'**il met en oeuvre les étapes suivantes :
- on conduit au moins deux véhicules (100; 200) et/ ou ensembles de véhicules (100; 200) en un pôle de bifurcation (K, H,..) du réseau qui sépare une zone centrale (ZC) de grande affluence d'une zone périphérique (ZP1, ZP2) de moindre affluence ;
- on réalise au dit pôle de bifurcation (K, H) l'attelage entre ces véhicules (100; 200) selon l'une quelconque des revendications 20 à 23 pour former un train de véhicules (300) à un seul conducteur selon la revendication 25 lorsque lesdits véhicules (100; 200) se dirigent depuis la zone périphérique (ZP1, ZP2) en direction de la zone centrale (ZC),
ou
- on réalise au dit pôle de bifurcation (K, H) le désattelage entre ces véhicules (100; 200) selon l'une quelconque parmi les revendications 26 et 27 pour défaire un train de véhicules (300) à un seul conducteur selon la revendication 25 provenant de la zone centrale (ZC) et obtenir plusieurs véhicules (100; 200) individuels autonomes et/ ou ensembles de véhicules (100; 200) autonomes se dirigeant en direction de la zone périphérique (ZP1, ZP2) selon différents trajets.

30. Procédé de gestion d'un ensemble de véhicules (100; 200) du même type, comprenant une cabine de pilotage (16), un espace de transport (18) de personnes et/ou d'objets, au moins un essieu avant (12) directeur et un système d'attelage (22) escamotable permettant de relier, par un attelage (223), les uns derrière les autres lesdits véhicules (100; 200) pour former un train de véhicules (300) comprenant au moins deux véhicules (100; 200) et permettant de séparer les uns des autres lesdits véhicules (100; 200) pour former plusieurs véhicules (100; 200) individuels autonomes et/ou ensembles de véhicules (100; 200) autonomes, l'opération d'attelage ou de désattelage s'effectuant à un pôle de bifurcation (H; K; ...) d'un circuit de circulation en forme de réseau arborescent ou en étoile, le pôle de bifurcation (H; K; ...) se trouvant entre des zones (ZC, ZP1, ZP2) de concentration de personnes et/ou d'objets différentes, **caractérisé en ce que** lesdits véhicules (100; 200) comportant en outre des moyens de protection (23) dudit attelage (223) formé entre deux véhicules (100; 200) reliés l'un à l'autre, **en ce que** lesdits moyens de protection (23) dudit attelage (223) sont aptes à passer d'une position repliée à une position déployée dans laquelle ledit attelage (223) est entouré par les moyens de protection (23), **en ce que** l'opération d'attelage comprend le déploiement desdits moyens de protection (23), et ce pour empêcher le contact entre ledit attelage (223) et un élément extérieur aux véhicules, et **en ce que** l'opération de désattelage comprend le repliement desdits moyens de protection (23), et ce pour dégager ledit attelage (223).

31. Procédé de transport de passagers et/ou d'objets au moyen d'un ensemble de véhicules (100; 200) du même type, comprenant une cabine de pilotage (16), un espace de transport (18) de personnes et/ou d'objets, au moins un essieu avant (12) directeur et un système d'attelage (22) escamotable permettant de relier, par un attelage (223), les uns derrière les autres lesdits véhicules (100; 200) pour former un train de véhicules (300) comprenant au moins deux véhicules (100; 200) et permettant de séparer les uns des autres lesdits véhicules (100; 200) pour former plusieurs véhicules (100; 200) individuels autonomes et/ou ensembles de véhicules (100; 200) autonomes, l'opération d'attelage ou de désattelage s'effectuant à un pôle de bifurcation (H; K; ...) d'un circuit de circulation en forme de réseau arborescent ou en étoile, le pôle de bifurcation (H; K; ...) se trouvant entre des zones de concentration de personnes et/ou d'objets différentes, **caractérisé en ce que** lesdits véhicules (100; 200) comportent en outre des moyens de protection (23) dudit attelage (223) formé entre deux véhicules (100; 200) reliés l'un à l'autre, **en ce que** lesdits moyens de protection (23) dudit attelage (223) sont aptes à passer d'une position repliée à une position déployée dans laquelle ledit attelage (223) est entouré par les moyens de protection (23), **en ce que** l'opération d'attelage comprend le déploiement desdits moyens de protection (23), et ce pour empêcher le contact entre ledit attelage (223) et un élément extérieur aux véhicules, et **en ce que** l'opération de désattelage comprend le repliement desdits moyens de protection (23), et ce pour dégager ledit attelage (223).

32. Procédé selon l'une quelconque parmi les revendications 30 et 31, **caractérisé en ce que** lesdits véhicules (100; 200) sont des autobus de transport de passagers.

33. Procédé selon l'une quelconque parmi les revendications 30 à 32, **caractérisé en ce que** le pôle de bifurcation (H; K; ...) se trouve dans une portion en étoile du réseau, entre une zone centrale (ZC) de forte concentration de passagers et/ou d'objets et une zone périphérique (ZP1, ZP2) de faible concentration de passagers et/ou d'objets.

## Claims

1. An autonomous wheeled vehicle (100; 200) provided with a driver's cabin (16) and a space (18) for transporting passengers and/or objects, including:
- at least a front steering axle (12), and
- a retractable coupling system (22) comprising a first portion (221) situated at the front of the vehicle (100; 200) and a second portion (222) situated at the rear of the vehicle (100; 200), the first portion (221) of one vehicle (100; 200) being suitable for co-operating with the second portion (222) of another vehicle (100; 200), when the coupling system (22) is extended, in order to connect the vehicles (100; 200) together by forming a coupling (223) between them,
the vehicle being **characterized in that** it further includes protector means (23) for protecting said coupling (223), that surround said coupling.

2. A vehicle (100; 200) according to claim 1, **characterized in that** said second portion (222) of the coupling system (22) can be activated so as to pass from a retracted position towards an extended position in which said second portion (222) is suitable for co-operating with said first portion (221) of the coupling system (22) of another vehicle (100; 200) so as to form a coupling (223) between them.

3. A vehicle (100; 200) according to claim 2, **characterized in that** said second portion (222) of the coupling system (22) presents a hitching bar (2221) capable of passing automatically from its retracted position to its extended position, and vice versa.

4. A vehicle (100; 200) according to claim 2 or claim 3, **characterized in that** said coupling system (22) further presents means for guiding the displacement of the second portion (222) between the retracted position and the extended position.

5. A vehicle (100; 200) according to claim 2 or claim 3, **characterized in that** said coupling system (22) further presents guide means (22216, 22116) serving, on the second portion (222) passing into its extended position, to guide its coming into co-operation with said first portion (221) of the coupling system (22).

6. A vehicle (100; 200) according to any preceding claim, **characterized in that** it further includes a contactless guidance system.

7. A vehicle (100; 200) according to claim 6, **characterized in that** said contactless guidance system makes use of a reference trace (10) on the road and of obstacle detectors.

8. A vehicle (100; 200) according to any preceding claim, **characterized in that** the coupling system (22) includes connection means allowing clearance with at least three degrees of freedom.

9. A vehicle (100; 200) according to any preceding claim, **characterized in that** said protector means (23) for protecting said coupling (223) are suitable for passing from a folded position to a deployed position in which said coupling (223) is surrounded by the protector means (23).

10. A vehicle (100; 200) according to claim 9, **characterized in that** said protector means (23) comprise a bellows situated at the rear of the vehicle (100; 200) and that can surround said coupling (223) when in the deployed position.

11. A vehicle (100; 200) according to claim 10 and claim 3, **characterized in that** the free end of said bellows is connected to said hitching bar (2221) in order to follow the movement of the hitching bar (2221).

12. A vehicle (100; 200) according to any preceding claim, **characterized in that** it further presents a system for recovering real steering data of the leading vehicle (100; 200) via the coupling so as to enable the following vehicle (100; 200) behind it to follow in the track of the leading vehicle (100; 200).

13. A vehicle (100; 200) according to any preceding claim, **characterized in that** it further presents a system for replicating controls and information from the driver's cabin (16) between the leading vehicle (100) and the following vehicle (200), via the coupling (223).

14. A vehicle (100; 200) according to any preceding claim, **characterized in that** it further includes means for covering the retracted coupling system (22).

15. A vehicle (100; 200) according to any preceding claim, **characterized in that** the driver's cabin (16) is transformable into passenger space, in particular by preventing access to the controls.

16. A vehicle (100; 200) according to any preceding claim, **characterized in that** it further includes software architecture that includes a coupling computer (OA) and an axle computer (OE).

17. A vehicle (100; 200) according to claim 16, **characterized in that** it further presents means (22115 and 22225) enabling the coupling computer (OA) to be aware of the situation of the coupling system (22) of said vehicle, and in particular of a coupling (223) being formed with another vehicle.

18. A vehicle (100; 200) according to claim 17, **characterized in that** said software architecture further includes a supervisor (SP) that makes it possible via the coupling computer (OA) to verify the locked position of the coupling (223) between the two vehicles (100, 200) in order to issue a warning if said locked position is not engaged.

19. A vehicle (100; 200) according to any one of claims 1 to 18, **characterized in that** it further includes a steering rear axle (14).

20. A coupling procedure for coupling at least two vehicles (100; 200) according to any one of claims 1 to 19, comprising the following steps:
a) moving a first vehicle forming the leading vehicle (100) into a docking location;
b) moving another vehicle forming a following vehicle (200) so as to bring it into alignment behind the leading vehicle (100) at a predetermined docking distance; and
c) activating the second portion (222) of the coupling system (22) of the leading vehicle (100) and the first portion (221) of the coupling system (22) of the following vehicle (200) so as to form a coupling (223) between them, the method being **characterized in that** it further comprises a step
d) whereby the protector means (23) for protecting said coupling system, situated at the rear of the leading vehicle (100) are activated in order to prevent any contact between the coupling (223) and an element outside the vehicle train (100; 200) thus formed.

21. A coupling procedure according to claim 20, **characterized in that** it further comprises, for each additional following vehicle (200) additional steps corresponding to steps b) to d), and comprising:
b') moving the additional following vehicle so as to put it in alignment behind the previously coupled following vehicle at a predetermined docking distance; then
c') activating the second portion (222) of the coupling system (22) of the additional following vehicle and the first portion (221) of the coupling system (22) of the previously coupled following vehicle that precedes it so as to form an additional coupling (223) between them; and
d') activating the protector means (23) for protecting said additional coupling (223), situated at the rear of the previously coupled following vehicle so as to prevent any contact between the additional coupling and an element external to the vehicle train thus formed.

22. A coupling procedure according to claim 20 or claim 21, **characterized in that** during step b) or b'), of moving the following vehicle (200), use is made of a contactless guidance system.

23. A coupling procedure according to claim 22, **characterized in that** said contactless guidance system makes use of a reference trace (10) on the road and of obstacle detectors.

24. A method of managing a network for transporting passengers and/or objects using vehicles (100; 200) according to any one of claims 1 to 19, the method being **characterized in that** it implements the following steps:
- driving at least two vehicles (100; 200) and/or vehicle sets (100; 200) coming from different origins (A, B, C, D, E, F, ...) towards one or more bifurcation poles (K, H, ...) of the network at the boundary between a high-traffic central zone (ZC) and a lower-traffic peripheral zone (ZP1, ZP2); and
- performing at said bifurcation pole the coupling procedure according to claim 20, 21, or 22 between said vehicles (100; 200) to form a vehicle train (100; 200) having a single driver when said vehicles (100; 200) are going from the peripheral zone (ZP1, ZP2) towards the central zone (ZC).

25. A vehicle train (300) using vehicles (100; 200) according to any one of claims 1 to 19, comprising a single leading vehicle (100) and at least one following vehicle (200), situated behind the leading vehicle (100), said vehicles (100; 200) being connected to one another by said coupling (223), the train being **characterized in that** the contact between said coupling (223) and an element external to the vehicles (100; 200) is prevented by said protector means (23).

26. A procedure for uncoupling the last coupling (223) of a vehicle train (300) according to claim 25, having at least one last following vehicle (200) and a leading vehicle (100), the procedure being **characterized in that** it comprises the following steps:
a) activating the protector means (23) of the last coupling (223) situated between the last following vehicle (200) and the vehicle (100; 200) preceding it so as to disengage said last coupling (223);
b) activating the second portion (222) of the coupling system (22) of the last following vehicle (200) and the first portion (221) of the coupling system (22) of the vehicle (100; 200) that precedes it so as to undo the last coupling (223) and retract said second portion (222) of the coupling system (22), whereby the last following vehicle (200) is separated from the vehicle train (300) and forms an autonomous vehicle (200) together with a train of remaining vehicles (100; 200); and
c) moving said autonomous vehicle (200) or the remaining vehicle train (100; 200).

27. An uncoupling procedure according to claim 26, for a vehicle according to claim 14, the procedure being **characterized in that** it further comprises, after step b), an additional step of activating said covering means (2222) of the last vehicle (100; 200) of the train of remaining vehicles (100; 200) in order to hide the retracted second portion (222) of the coupling system (22).

28. A method of managing a network for transporting people and/or objects using vehicles (100; 200) according to any one of claims 1 to 19, the method being **characterized in that** it implements the following steps:
- driving a vehicle train (300) comprising at least two coupled-together vehicles (100; 200) towards a bifurcation pole (H, K, ...) of the central zone (ZC) of a network at the boundary between a high-traffic central zone (ZC) and a lower-traffic peripheral zone (ZP1, ZP2); and
- implementing between said vehicles (100; 200), at said bifurcation pole (H, K, ...), the uncoupling procedure according to claim 26 or claim 27 for breaking up a single-driver vehicle train (300) coming from the central zone (ZC) to obtain a plurality of individual autonomous vehicles (100; 200) and/or autonomous vehicle sets (100; 200) heading towards the peripheral zone (ZP1, ZP2) on different routes towards other stations (A, B, C, D, E, F, ...).

29. A method of managing a network for transporting people and/or objects using vehicles (100; 200) according to any one of claims 1 to 19, the method being **characterized in that** it implements the following steps:
- driving at least two vehicles (100; 200) and/or vehicle sets (100; 200) to a bifurcation pole (K, H, ...) of the network at the boundary between a high-traffic central zone (ZC) and a lower-traffic peripheral zone (ZP1, ZP2);
- at said bifurcation pole (K, H) said vehicles (100; 200) are coupled together according to any one of claims 20 to 23 to form a single-driver vehicle train (300) according to claim 25 when said vehicles (100; 200) are going from the peripheral zone (ZP1, ZP2) towards the central zone (ZC); or
- at said bifurcation pole (K, H) said vehicles (100; 200) are uncoupled according to claim 26 or claim 27 to break up a single-driver vehicle train (300) according to claim 25 coming from the central zone (ZC) to obtain a plurality of autonomous individual vehicles (100; 200) and/or autonomous vehicle sets (100; 200) heading towards the peripheral zone (ZP1, ZP2) along different routes.

30. A method of managing a set of same-type vehicles (100; 200) each having a driver's cabin (16), a space (18) for transporting people and/or objects, at least a steering front axle (12), and a retractable coupling system (22) enabling said vehicles (100; 200) to be coupled together (223) one behind another to form a vehicle train (300) comprising at least two vehicles (100; 200), and enabling said vehicles (100; 200) to be separated from one another in order to form a plurality of autonomous individual vehicles (100; 200) and/or autonomous vehicle sets (100; 200), with the coupling and uncoupling operations being performed at a bifurcation pole (H, K, ...) of a traffic network in the form of a tree structure or star structure, the bifurcation pole (H, K, ...) lying at the boundary between zones (ZC, ZP1, ZP2) having different concentrations of people and/or objects, the method being **characterized in that** said vehicles (100; 200) further include protector means (23) for protecting said coupling (223) formed between two connected-together vehicles (100; 200), **in that** said protector means (23) for protecting said coupling (223) are suitable for passing from a folded position to a deployed position in which said coupling (223) is surrounded by the protector means (23), **in that** the coupling operation comprises the deployment movement of said protector means (23) so as to prevent any contact between said coupling (223) and an element outside the vehicle, and **in that** the uncoupling operation comprises the folding movement of said protector means (23) so as to disengage said coupling (223).

31. A method of transporting passengers and/or objects by means of a set of same-type vehicles (100; 200) each having a driver's cabin (16), a space (18) for transporting people and/or objects, at least a steering front axle (12), and a retractable coupling system (22) enabling said vehicles (100; 200) to be coupled together (223) one behind another to form a vehicle train (300) comprising at least two vehicles (100; 200), and enabling said vehicles (100; 200) to be separated from one another in order to form a plurality of autonomous individual vehicles (100; 200) and/or autonomous vehicle sets (100; 200), with the coupling and uncoupling operations being performed at a bifurcation pole (H, K, ...) of a traffic network in the form of a tree structure or star structure, the bifurcation pole (H, K, ...) lying at the boundary between zones having different concentrations of people and/or objects, the method being **characterized in that** said vehicles (100; 200) further include protector means (23) for protecting said coupling (223) formed between two connected-together vehicles (100; 200), **in that** said protector means (23) for protecting said coupling (223) are suitable for passing from a folded position to a deployed position in which said coupling (223) is surrounded by the protector means (23), **in that** the coupling operation comprises the deployment movement of said protector means (23) so as to prevent any contact between said coupling (223) and an element outside the vehicle, and **in that** the uncoupling operation comprises the folding movement of said protector means (23) so as to disengage said coupling (223).

32. A method according to claim 30 or claim 31, **characterized in that** said vehicles (100; 200) are buses for transporting passengers.

33. A method according to any one of claims 30 to 32, **characterized in that** the bifurcation pole (H, K, ...) is located in a starshaped portion of the network between a central zone (ZC) having a high concentration of passengers and/or objects and a peripheral zone (ZP1, ZP2) having a low concentration of passengers and/or objects.

## Patentansprüche

1. Autonomes Fahrzeug (100; 200) auf Rädern, das mit einer Steuerkabine (16) und mit einem Raum zur Beförderung (18) von Fahrgästen und/oder Gegenständen ausgestattet ist, umfassend:
- wenigstens eine vordere Lenkachse (12),
- ein einfahrbares Kuppelsystem (22), das einen am vorderen Teil des Fahrzeugs (100; 200) befindlichen ersten Teil (221) und einen am hinteren Teil des Fahrzeugs (100; 200) befindlichen zweiten Teil (222) umfaßt, wobei der erste Teil (221) eines Fahrzeugs (100; 200) geeignet ist, mit dem zweiten Teil (222) eines weiteren Fahrzeugs (100; 200) zusammenzuwirken, wenn das Kuppelsystem (22) ausgefahren ist, um die Fahrzeuge (100; 200) - unter Ausbildung einer Kupplung (223) zwischen ihnen - miteinander zu verbinden,
**dadurch gekennzeichnet, daß** es ferner Mittel zum Schutz (23) der Kupplung (223), welche die Kupplung umgeben, aufweist.

2. Fahrzeug (100; 200) nach Anspruch 1, **dadurch gekennzeichnet, daß** der zweite Teil (222) des Kuppelsystems (22) aktiviert werden kann, so daß er von einer eingefahrenen Position in eine ausgefahrene Position übergeht, in welcher der zweite Teil (222) geeignet ist, mit dem ersten Teil (221) des Kuppelsystems (22) eines weiteren Fahrzeugs (100; 200) unter Ausbildung einer Kupplung (223) zwischen ihnen zusammenzuwirken.

3. Fahrzeug (100; 200) nach Anspruch 2, **dadurch gekennzeichnet, daß** der zweite Teil (222) des Kuppelsystems (22) eine Ankuppelstange (2221) aufweist, die von ihrer eingefahrenen Position automatisch in ihre ausgefahrene Position übergehen kann und umgekehrt.

4. Fahrzeug (100; 200) nach Anspruch 2 oder 3, **dadurch gekennzeichnet, daß** das Kuppelsystem (22) ferner Mittel zum Führen der Bewegung des zweiten Teils (222) zwischen der eingefahrenen Position und der ausgefahrenen Position aufweist.

5. Fahrzeug (100; 200) nach Anspruch 2 oder 3, **dadurch gekennzeichnet, daß** das Kuppelsystem (22) ferner Führungsmittel (22216, 22116) aufweist, die ermöglichen, beim Übergang des zweiten Teils (222) in die ausgefahrene Position dessen Vorgang, mit dem ersten Teil (221) des Kuppelsystems (22) in Zusammenwirkung zu treten, zu führen.

6. Fahrzeug (100; 200) nach einem der vorhergehenden Ansprüche, **dadurch gekennzeichnet, daß** es ferner ein immaterielles Führungssystem umfaßt.

7. Fahrzeug (100; 200) nach Anspruch 6, **dadurch gekennzeichnet, daß** das immaterielle Führungssystem einen Bezugsverlauf (10) auf dem Fahrweg sowie Hindernisdetektoren verwendet.

8. Fahrzeug (100; 200) nach einem der vorhergehenden Ansprüche, **dadurch gekennzeichnet, daß** das Kuppelsystem (22) Verbindungsmittel umfaßt, die ein Spiel in wenigstens drei Freiheitsgraden zulassen.

9. Fahrzeug (100; 200) nach einem der vorhergehenden Ansprüche, **dadurch gekennzeichnet, daß** die Schutzmittel (23) der Kupplung (223) geeignet sind, von einer zusammengefalteten Position in eine entfaltete Position überzugehen, in der die Kupplung (223) von den Schutzmitteln (23) umgeben ist.

10. Fahrzeug (100; 200) nach Anspruch 9, **dadurch gekennzeichnet, daß** die Schutzmittel (23) einen am hinteren Teil des Fahrzeugs (100; 200) befindlichen Faltenbalg umfassen, der in der entfalteten Position die Kupplung (223) umgeben kann.

11. Fahrzeug (100; 200) nach Anspruch 10 und Anspruch 3, **dadurch gekennzeichnet, daß** das freie Ende des Faltenbalgs mit der Ankuppelstange (2221) verbunden ist, um der Bewegung der Ankuppelstange (2221) zu folgen.

12. Fahrzeug (100; 200) nach einem der vorhergehenden Ansprüche, **dadurch gekennzeichnet, daß** es ferner ein System zur Gewinnung der Daten der Ausrichtung der Räder des führenden Fahrzeugs (100; 200) durch die Kupplung aufweist, um dem hinteren, geführten Fahrzeug (100; 200) zu ermöglichen, wieder in die Spuren des führenden Fahrzeugs (100; 200) zu gelangen.

13. Fahrzeug (100; 200) nach einem der vorhergehenden Ansprüche, **dadurch gekennzeichnet, daß** es ferner ein System zum Replizieren der Befehle und der Informationen der Steuerkabine (16) zwischen führendem Fahrzeug (100) und geführtem Fahrzeug (200) über die Kupplung (223) aufweist.

14. Fahrzeug (100; 200) nach einem der vorhergehenden Ansprüche, **dadurch gekennzeichnet, daß** es ferner Mittel zum Abdecken des eingefahrenen Kuppelsystems (22) umfaßt.

15. Fahrzeug (100; 200) nach einem der vorhergehenden Ansprüche, **dadurch gekennzeichnet, daß** die Steuerkabine (16) in einen Fahrgastraum umwandelbar ist, insbesondere durch Blockierung des Zugangs zu den Bedienungselementen.

16. Fahrzeug (100; 200) nach einem der vorhergehenden Ansprüche, **dadurch gekennzeichnet, daß** es ferner eine Softwarearchitektur aufweist, die einen Kuppelcomputer (OA) und einen Achsencomputer (OE) umfaßt.

17. Fahrzeug (100; 200) nach Anspruch 16, **dadurch gekennzeichnet, daß** es ferner Mittel (22115 und 22225) aufweist, die dem Kuppelcomputer (OA) ermöglichen, von der Situation des Kuppelsystems (22) des Fahrzeugs und insbesondere von der Ausbildung einer Kupplung (223) mit einem weiteren Fahrzeug Kenntnis zu haben.

18. Fahrzeug (100; 200) nach Anspruch 17, **dadurch gekennzeichnet, daß** die Softwarearchitektur ferner einen Superviser (SP) umfaßt, der ermöglicht, über den Kuppelcomputer (OA) die verriegelte Position der Kupplung (223) zwischen zwei Fahrzeugen (100, 200) zu prüfen, um zu warnen, falls diese verriegelte Position nicht vorliegt.

19. Fahrzeug (100; 200) nach einem der Ansprüche 1 bis 18, **dadurch gekennzeichnet, daß** es ferner eine hintere Lenkachse (14) umfaßt.

20. Verfahren zum Kuppeln zwischen wenigstens zwei Fahrzeugen (100; 200) nach einem der Ansprüche 1 bis 19, welches die folgenden Schritte umfaßt:
a) ein erstes Fahrzeug, welches das führende Fahrzeug (100) bildet, wird an einen Kuppelplatz bewegt,
b) ein weiteres Fahrzeug, das ein geführtes Fahrzeug (200) bildet, wird bewegt, um es hinter dem führenden Fahrzeug (100) in einem vorbestimmten Kuppelabstand auszurichten,
c) der zweite Teil (222) des Kuppelsystems (22) des führenden Fahrzeugs (100) und der erste Teil (221) des Kuppelsystems (22) des geführten Fahrzeugs (200) werden aktiviert, um zwischen ihnen eine Kupplung (223) herzustellen,
**dadurch gekennzeichnet, daß** es ferner einen Schritt umfaßt d) wonach die am hinteren Teil des führenden Fahrzeugs (100) befindlichen Schutzmittel (23) des Kuppelsystems aktiviert werden, um jedweden Kontakt zwischen der Kupplung (223) und einem außerhalb des auf diese Weise gebildeten Fahrzeugzuges (100; 200) befindlichen Element zu verhindern.

21. Kuppelverfahren nach Anspruch 20, **dadurch gekennzeichnet, daß** es ferner für jedes zusätzliche geführte Fahrzeug (200) zusätzliche Schritte umfaßt, die den Schritten b) bis d) entsprechen und bei denen:
b') das zusätzliche geführte Fahrzeug derart bewegt wird, daß es hinter dem zuvor angekuppelten geführten Fahrzeug in einem vorbestimmten Kuppelabstand ausgerichtet ist, dann
c') der zweite Teil (222) des Kuppelsystems (22) des zusätzlichen geführten Fahrzeugs und der erste Teil (221) des Kuppelsystems (22) des zuvor angekuppelten geführten Fahrzeugs, das diesem vorangeht, aktiviert werden, um zwischen ihnen eine zusätzliche Kupplung (223) herzustellen, und
d') die Schutzmittel (23) der zusätzlichen Kupplung (223), die sich am hinteren Teil des zuvor angekuppelten geführten Fahrzeugs befinden, aktiviert werden, um jedweden Kontakt zwischen der zusätzlichen Kupplung und einem außerhalb des auf diese Weise gebildeten Fahrzeugzuges befindlichen Element zu verhindern.

22. Kuppelvarfahren nach einem der Ansprüche 20 bis 21, **dadurch gekennzeichnet, daß** während des Schrittes b) oder b') des Bewegens des geführten Fahrzeugs (200) ein immaterielles Führungssystem verwendet wird.

23. Kuppelverfahren nach Anspruch 22, **dadurch gekennzeichnet, daß** das immaterielle Führungssystem einen Bezugsverlauf (10) auf dem Fahrweg sowie Hindernisdetektoren verwendet.

24. Verfahren zur Steuerung eines Netzes für die Beförderung von Fahrgästen und/oder Gegenständen, das Fahrzeuge (100; 200) nach einem der Ansprüche 1 bis 19 verwendet, **dadurch gekennzeichnet, daß** es die folgenden Schritte durchführt:
- wenigstens zwei Fahrzeuge (100; 200) und/oder Einheiten von Fahrzeugen (100; 200), die von unterschiedlichen Ausgangspunkten (A, B, C, D, E, F...) kommen, werden zu einem oder mehreren Gabelungspunkt(en) (K, H) des Netzes gefahren, welcher einen zentralen Bereich (ZC) mit hohem Zulauf von einem Randgebiet (ZP1, ZP2) mit geringerem Zulauf trennt, und
- an dem Gabelungspunkt wird das Kuppelverfahren nach Anspruch 20, 21 oder 22 zwischen diesen Fahrzeugen (100; 200) durchgeführt, um einen Fahrzeugzug (100; 200) mit einem einzigen Fahrer zu bilden, wenn die Fahrzeuge (100; 200) von dem Randgebiet (ZP1, ZP2) aus in Richtung des zentralen Bereichs (ZC) fahren.

25. Fahrzeugzug (300), der Fahrzeuge (100; 200) nach einem der Ansprüche 1 bis 19 verwendet, mit einem einzigen führenden Fahrzeug (100) sowie wenigstens einem hinter dem führenden Fahrzeug (100) befindlichen geführten Fahrzeug (200), wobei die Fahrzeuge (100; 200) durch die Kupplung (223) miteinander verbunden sind, **dadurch gekennzeichnet, daß** der Kontakt der Kupplung (223) mit einem außerhalb der Fahrzeuge (100; 200) befindlichen Element durch die Schutzmittel (23) verhindert wird.

26. Verfahren zum Entkuppeln der letzten Kupplung (223) eines Fahrzeugzuges (300) nach Anspruch 25, mit wenigstens einem letzten geführten Fahrzeug (200) und einem führenden Fahrzeug (100), **dadurch gekennzeichnet, daß** es die folgenden Schritte umfaßt:
a) die Schutzmittel (23) der letzten Kupplung (223), die sich zwischen dem letzten geführten Fahrzeug (200) und dem diesem vorausgehenden Fahrzeug (100; 200) befindet, werden aktiviert, um die letzte Kupplung (223) zu lösen,
b) der zweite Teil (222) des Kuppelsystems (22) des letzten geführten Fahrzeugs (200) und der erste Teil (221) des Kuppelsystems (22) des diesem vorausgehenden Fahrzeugs (100; 200) werden aktiviert, um die letzte Kupplung (223) zu lösen und den zweiten Teil (222) des Kuppelsystems (22) einzufahren, wodurch das letzte geführte Fahrzeug (200) von dem Fahrzeugzug (300) getrennt wird und ein autonomes Fahrzeug (200) sowie einen Zug aus verbleibenden Fahrzeugen (100; 200) bildet, und
c) das autonome Fahrzeug (200) oder der Zug aus verbleibenden Fahrzeugen (100; 200) wird versetzt.

27. Entkupplungsverfahren nach Anspruch 26, für ein Fahrzeug nach Anspruch 14, **dadurch gekennzeichnet, daß** es ferner nach dem Schritt b) einen zusätzlichen Schritt umfaßt, bei dem die Abdeckmittel (2222) des letzten Fahrzeugs (100; 200) des Zuges aus verbleibenden Fahrzeugen (100; 200) aktiviert werden, um den zweiten eingefahrenen Teil (222) des Kuppelsystems (22) zu bedecken.

28. Verfahren zur Steuerung eines Netzes für die Beförderung von Personen und/oder Gegenständen, das Fahrzeuge (100; 200) nach einem der Ansprüche 1 bis 19 verwendet, **dadurch gekennzeichnet, daß** es die folgenden Schritte durchführt:
- ein Fahrzeugzug (300), der wenigstens zwei gekuppelte Fahrzeuge (100; 200) umfaßt, wird in Richtung eines Gabelungspunktes (H, K...) des zentralen Bereichs (ZC) eines Netzes gefahren, der einen zentralen Bereich (ZC) mit hohem Zulauf von einem Randgebiet (ZP1, ZP2) mit geringerem Zulauf trennt, und
- an dem Gabelungspunkt (H, K...) wird zwischen diesen Fahrzeugen (100; 200) das Entkuppelverfahren nach Anspruch 26 oder 27 durchgeführt, um einen von dem zentralen Bereich (ZC) kommenden Fahrzeugzug (300) mit einem einzigen Fahrer zu lösen und um mehrere autonome Einzelfahrzeuge (100; 200) und/oder Einheiten von autonomen Fahrzeugen (100; 200) zu erhalten, die in Richtung des Randgebietes (ZP1, ZP2) entlang unterschiedlicher Strecken zu einer anderen Station (A, B, C, D, E, F...) fahren.

29. Verfahren zur Steuerung eines Netzes für die Beförderung von Personen und/oder Gegenständen, das Fahrzeuge (100; 200) nach einem der Ansprüche 1 bis 19 verwendet, **dadurch gekennzeichnet, daß** es die folgenden Schritte durchführt:
- wenigstens zwei Fahrzeuge (100; 200) und/oder Einheiten von Fahrzeugen (100; 200) werden zu einem Gabelungspunkt (K, H...) des Netzes gefahren, der einen zentralen Bereich (ZC) mit hohem Zulauf von einem Randgebiet (ZP1, ZP2) mit geringerem Zulauf trennt,
- an dem Gabelungspunkt (K, H) wird das Kuppeln zwischen diesen Fahrzeugen (100; 200) nach einem der Ansprüche 20 bis 23 vollzogen, um einen Fahrzeugzug (300) mit einem einzigen Fahrer nach Anspruch 25 zu bilden, wenn die Fahrzeuge (100; 200) von dem Randgebiet (ZP1, ZP2) aus in Richtung des zentralen Bereichs (ZC) fahren,
oder
- an dem Gabelungspunkt (K, H) wird das Entkuppeln zwischen diesen Fahrzeugen (100; 200) nach einem der Ansprüche 26 und 27 vollzogen, um einen von dem zentralen Bereich (ZC) kommenden Fahrzeugzug (300) mit einem einzigen Fahrer nach Anspruch 25 zu lösen und um mehrere autonome Einzelfahrzeuge (100; 200) und/oder Einheiten von autonomen Fahrzeugen (100; 200) zu erhalten, die in Richtung des Randgebietes (ZP1, ZP2) entlang unterschiedlicher Strecken fahren.

30. Verfahren zur Steuerung einer Einheit von Fahrzeugen (100; 200) des gleichen Typs, die eine Steuerkabine (16), einen Raum zur Beförderung (18) von Personen und/oder Gegenständen, wenigstens eine vordere Lenkachse (12) und ein einfahrbares Kuppelsystem (22) umfassen, das ermöglicht, die Fahrzeuge (100; 200) durch eine Kupplung (223) hintereinander zu verbinden, um einen Fahrzeugzug (300) mit wenigstens zwei Fahrzeugen (100; 200) zu bilden, und das ermöglicht, die Fahrzeuge (100; 200) voneinander zu trennen, um mehrere autonome Einzelfahrzeuge (100; 200) und/oder Einheiten von autonomen Fahrzeugen (100; 200) zu bilden, wobei der Vorgang des Kuppelns oder Entkuppelns an einem Gabelungspunkt (H; K; ...) eines Verkehrskreises in Form eines baum- oder sternförmigen Netzes erfolgt, wobei der Gabelungspunkt (H; K; ...) sich zwischen Bereichen (ZC, ZP1, ZP2) unterschiedlicher Personen- und/oder Gegenstandskonzentration befindet, **dadurch gekennzeichnet, daß** die Fahrzeuge (100; 200) ferner Mittel zum Schutz (23) der zwischen zwei untereinander verbundenen Fahrzeugen (100; 200) gebildeten Kupplung (223) umfassen, daß die Schutzmittel (23) der Kupplung (223) geeignet sind, von einer zusammengefalteten Position in eine entfaltete Position überzugehen, in der die Kupplung (223) von den Schutzmitteln (23) umgeben ist, daß der Kuppelvorgang das Entfalten der Schutzmittel (23) umfaßt, und dies, um den Kontakt zwischen der Kupplung (223) und einem außerhalb der Fahrzeuge befindlichen Element zu verhindern, und daß der Vorgang des Entkuppelns das Zusammenfalten der Schutzmittel (23) umfaßt, und dies, um die Kupplung (223) zu lösen.

31. Verfahren zur Beförderung von Fahrgästen und/oder Gegenständen mittels einer Einheit von Fahrzeugen (100; 200) des gleichen Typs, die eine Steuerkabine (16), einen Raum zur Beförderung (18) von Personen und/oder Gegenständen, wenigstens eine vordere Lenkachse (12) und ein einfahrbares Kuppelsystem (22) umfassen, das ermöglicht, die Fahrzeuge (100; 200) durch eine Kupplung (223) hintereinander zu verbinden, um einen Fahrzeugzug (300) mit wenigstens zwei Fahrzeugen (100; 200) zu bilden, und das ermöglicht, die Fahrzeuge (100; 200) voneinander zu trennen, um mehrere autonome Einzelfahrzeuge (100; 200) und/oder Einheiten von autonomen Fahrzeugen (100; 200) zu bilden, wobei der Vorgang des Kuppelns oder Entkuppelns an einem Gabelungspunkt (H; K; ...) eines Verkehrskreises in Form eines baum- oder sternförmigen Netzes erfolgt, wobei der Gabelungspunkt (H; K; ...) sich zwischen Bereichen unterschiedlicher Personen-und/oder Gegenstandskonzentration befindet, **dadurch gekennzeichnet, daß** die Fahrzeuge (100; 200) ferner Mittel zum Schutz (23) der zwischen zwei untereinander verbundenen Fahrzeugen (100; 200) gebildeten Kupplung (223) umfassen, daß die Schutzmittel (23) der Kupplung (223) geeignet sind, von einer zusammengefalteten Position in eine entfaltete Position überzugehen, in der die Kupplung (223) von den Schutzmitteln (23) umgeben ist, daß der Kuppelvorgang das Entfalten der Schutzmittel (23) umfaßt, und dies, um den Kontakt zwischen der Kupplung (223) und einem außerhalb der Fahrzeuge befindlichen Element zu verhindern, und daß der Vorgang des Entkuppelns das Zusammenfalten der Schutzmittel (23) umfaßt, und dies, um die Kupplung (223) zu lösen.

32. Verfahren nach einem der Ansprüche 30 und 31, **dadurch gekennzeichnet, daß** die Fahrzeuge (100; 200) Omnibusse für die Beförderung von Fahrgästen sind.

33. Verfahren nach einem der Ansprüche 30 bis 32, **dadurch gekennzeichnet, daß** der Gabelungspunkt (H; K; ...) sich in einem sternförmigen Abschnitt des Netzes zwischen einem zentralen Bereich (ZC) mit hoher Konzentration von Fahrgästen und/oder Gegenständen und einem Randgebiet (ZP1, ZP2) mit geringer Konzentration von Fahrgästen und/oder Gegenständen befindet.
